(19) **Europäisches Patentamt / European Patent Office / Office européen des brevets**

(11) **EP 3 960 815 A1**

(12) # EUROPEAN PATENT APPLICATION

(43) Date of publication:
**02.03.2022 Bulletin 2022/09**

(21) Application number: **21202629.8**

(22) Date of filing: **27.03.2019**

(51) International Patent Classification (IPC):
**C08L 67/02** (2006.01)  **C08J 5/18** (2006.01)
**C08K 3/013** (2018.01)  **C08K 3/26** (2006.01)
**C08K 3/34** (2006.01)  **C08K 3/36** (2006.01)
**C08L 67/04** (2006.01)  **C08L 101/16** (2006.01)
**C08G 63/06** (2006.01)  **C08G 63/16** (2006.01)

(52) Cooperative Patent Classification (CPC):
(C-Sets available)
**C08J 5/18; C08G 63/06; C08G 63/16; C08K 3/013; C08K 3/26; C08K 3/34; C08K 3/36; C08L 67/02; C08L 67/04;** C08J 2300/16; C08J 2367/02; C08L 101/16                                (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2018   JP 2018067297**
            **30.08.2018   JP 2018161612**
            **04.02.2019   JP 2019018067**

(62) Document number(s) of the earlier application(s) in accordance with Art. 76 EPC:
**19777803.8 / 3 778 771**

(71) Applicant: **Mitsubishi Chemical Corporation**
**Chiyoda-ku**
**Tokyo 100-8251 (JP)**

(72) Inventors:
• **Inagaki, Mai**
  **Tokyo, 100-8251 (JP)**
• **Kusuno, Atsushi**
  **Tokyo, 100-8251 (JP)**

(74) Representative: **Hoffmann Eitle**
**Patent- und Rechtsanwälte PartmbB**
**Arabellastraße 30**
**81925 München (DE)**

Remarks:
This application was filed on 14-10-2021 as a divisional application to the application mentioned under INID code 62.

(54) **MOLDED ARTICLE, SHEET AND CONTAINER, AND TUBULAR ARTICLE, STRAW, COTTON SWAB, AND STICK FOR BALOONS**

(57)  A molded article contains an aliphatic polyester-based resin composition. The aliphatic polyester-based resin composition contains an aliphatic polyester-based resin (A) containing a repeat unit derived from an aliphatic diol and a repeat unit derived from an aliphatic dicarboxylic acid as main structural units, a polyhydroxyalkanoate (B), and an inorganic filler (C). The polyhydroxyalkanoate (B) contains a 3-hydroxybutyrate unit and a 3-hydroxyhexanoate unit as main structural units. The mass ratio of the aliphatic polyester-based resin (A) to the polyhydroxyalkanoate (B) is 40/60 to 10/90. The amount of the inorganic filler (C) relative to the total amount of the aliphatic polyester-based resin (A), the polyhydroxyalkanoate (B), and the inorganic filler (C) is 15 to 50% by mass.

EP 3 960 815 A1

(52) Cooperative Patent Classification (CPC): (Cont.)

C-Sets
**C08L 67/04, C08K 3/346, C08L 67/02**

**Description**

Technical Field

The present invention relates to a molded article, a sheet, and a container, which are obtained by molding an aliphatic polyester-based resin composition.
The present invention relates to a tubular article obtained by molding an aliphatic polyester-based resin composition and to a straw, a cotton swab, and a stick for balloons, which are produced by using the tubular article.

Background Art

Plastic waste causes large loads on the global environment such as influences on ecosystems, generation of hazardous gases during combustion, and global warming due to a large amount of combustion heat. In recent years, to solve this problem, development is being actively conducted on biodegradable plastics.
In particular, carbon dioxide generated when biodegradable plastics of plant origin are combusted was originally present in the air, and the combustion of the biodegradable plastics does not cause an increase in the amount of carbon dioxide in the air. This is referred to as carbon neutral. Under the Kyoto Protocol that sets targets for reducing carbon dioxide, importance is placed on the carbon neutral, and this has led to the desire for active use of biodegradable plastics of plant origin.
From the viewpoint of biodegradability and carbon neutrality, aliphatic polyester-based resins are receiving attention as the biodegradable plastics of plant origin. In particular, attention is given to polyhydroxyalkanoate-based resins (hereinafter may be referred to as PHA-based resins). Among the PHA-based resins, particular attention is given to poly(3-hydroxybutyrate) homopolymer resins (hereinafter referred to as PHB), poly(3-hydroxybutyrate-co-3-hydroxyvalerate) copolymer resins (hereinafter may be referred to as PHBV), poly(3-hydroxybutyrate-co-3-hydroxyhexanoate) copolymer resins (hereinafter may be referred to as PHBH), poly(3-hydroxybutyrate-co-4-hydroxybutyrate) copolymer resins, polylactic acid, etc.
PTL 1 discloses a molded article formed of an aliphatic polyester resin composition containing a polyhydroxyalkanoate, an amide bond-containing compound, and pentaerythritol. It is stated that molding workability during injection molding or sheet forming is improved.
Polyhydroxyalkanoates have high biodegradability, therefore decompose rapidly after use, and do not need to be incinerated, and various applications of these resins (such as food packaging materials) are being developed.
PTL 2 discloses a biodegradable heat-resistant container. Such a container is obtained by molding a biodegradable resin composition containing 50% by mass or more of PHB, specifically a resin composition containing polybutylene succinate, PHB, and calcium carbonate.
PTL 3 discloses a biodegradable resin container having excellent heat resistance that suppresses a loss in the amount of water in the content. The biodegradable resin container consists mainly of a biodegradable resin in which a polylactic acid resin is mixed with a polybutylene succinate resin.
Application of a biodegradable resin to a tubular product that is used for straws, tubes, and hoses has been recently studied.
PTL 4 discloses a straw that contains a polylactic acid as an essential constituent and also contains polybutylene succinate adipate, which is an aliphatic polyester, or polybutylene adipate terephthalate, which is an aliphatic/aromatic polyester.
PTL 5 discloses a straw obtained by molding a resin containing a polylactic acid, polybutylene adipate terephthalate, and an inorganic filler.

PTL 1:    International Publication No. WO2014/068943
PTL 2:    JP 2001-341771 A
PTL 3:    JP 2001-39426 A
PTL 4:    JP 2005-350530 A
PTL 5:    JP 2011-208040 A

The recent social trend toward stronger protection of the natural environment has led to the desire for biodegradable resins that are not partially biodegradable but are completely biodegradable. As for the environment of biodegradation, there is a desire not only for biodegradability in an aerobic composting environment at relatively high temperature (58°C or higher) but also for biodegradability in an aerobic composting environment at room temperature (28°C). When biodegradable resins exhibiting biodegradability at room temperature are used to form, for example, sheets and containers, specifically, household packaging materials, tableware, etc., they can be treated by home composting.
PTL 1 to PTL 3 show examples using biodegradable resins; however, such proposed biodegradable resins have a low rate of biodegradation at room temperature and thus do not satisfy recent requirements.

In PTL 2, PHB is used for a product. Such a product is hard and brittle and thus has low impact resistance and low piercing strength when molded. In addition, odor is generated during processing, and the obtained molded products have odor.

In PTL 3, polylactic acid and polybutylene succinate are used for a wrapping material. Such a wrapping material has high transmittance of oxygen and water vapor and thus cannot be used for sheets or containers for wrapping food that is likely to be degraded by oxygen (e.g., coffee).

In consideration of environmental pollution caused by discarded used plastic products, particularly, effects of microplastics generated from used plastic products discarded to the sea on marine creatures, high biodegradability is required not only in aerobic compost (in soil) at room temperature (28°C) but also in the sea, regarding biodegradability in the environment. If a biodegradable resin has biodegradability in the sea (marine biodegradability) as well as biodegradability at room temperature, straws, tubes, or hoses containing such a biodegradable resin can be not only processed in home compost but also biodegraded in the sea after being used, thereby eliminating adverse influence on marine creatures, which is caused by microplastics.

PTL 4 and PTL 5 disclose a straw containing a biodegradable resin of, for example, polylactic acid and polybutylene succinate adipate or polybutylene adipate terephthalate, which is an aliphatic-aromatic polyester. Such proposed biodegradable resins have low biodegradability both at room temperature and in the sea and thus do not satisfy the demand for mitigating the environmental load, which has been rapidly intensified.

PTL 1 discloses an article molded using PHBH. Such a molded article is hard and brittle and thus has poor impact resistance and piercing strength. In addition, such a molded article has a problem of poor stability during a molding process.

Summary of Invention

[First Invention]

An object of the first invention is to provide a molded article. Such a molded article is biodegraded at room temperature more rapidly and has more excellent moldability when produced, higher mechanical properties, such as impact resistance, and more excellent characteristics, such as heat resistance, than a molded article containing a related biodegradable resin. In addition, such a molded article has water vapor barrier properties/oxygen barrier properties when used as a sheet or a container.

The inventors found that a molded article obtained by molding an aliphatic polyester-based resin composition in which an aliphatic polyester-based resin (A) containing a repeat unit derived from an aliphatic diol and a repeat unit derived from an aliphatic dicarboxylic acid as main structural units, a polyhydroxyalkanoate (B), and an inorganic filler (C) are contained and mixed together at a certain ratio is biodegraded rapidly at room temperature and has excellent moldability, excellent mechanical properties, such as impact resistance, excellent heat resistance, and water vapor barrier properties/oxygen barrier properties, leading to this invention.

The first invention is summarized in the following [1] to [7].

[1] A molded article comprising an aliphatic polyester-based resin composition,

wherein the aliphatic polyester-based resin composition contains an aliphatic polyester-based resin (A) containing a repeat unit derived from an aliphatic diol and a repeat unit derived from an aliphatic dicarboxylic acid as main structural units, a polyhydroxyalkanoate (B), and an inorganic filler (C),
the polyhydroxyalkanoate (B) is a copolymer containing a 3-hydroxybutyrate unit and a 3-hydroxyhexanoate unit as main structural units,
a mass ratio of the aliphatic polyester-based resin (A) to the polyhydroxyalkanoate (B) is 40/60 to 10/90, and
an amount of the inorganic filler (C) relative to a total amount of the aliphatic polyester-based resin (A), the polyhydroxyalkanoate (B), and the inorganic filler (C) is 15 to 50% by mass.

[2] The molded article according to [1], wherein the inorganic filler (C) is one or two or more selected from a group consisting of anhydrous silica, calcium carbonate, talc, and zeolite.
[3] The molded article according to [1] or [2], wherein a ratio of a repeat unit derived from succinic acid to repeat units derived from all dicarboxylic acids contained in the aliphatic polyester-based resin (A) is 5% by mol or higher and 100% by mol or lower.
[4] The molded article according to any one of [1] to [3] comprising the injection-molded article or an extrusion-molded article.
[5] A sheet comprising the molded article according to any one of [1] to [4].

[6] A container comprising the molded article according to any one of [1] to [4].

[7] The container according to [6], wherein the container is a food packaging container.

[Second Invention]

An object of the second invention is to provide a tubular article. Such a tubular article has higher biodegradability at room temperature, more excellent marine biodegradability, and more excellent moldability when produced, higher mechanical properties, such as piercing strength, and more excellent characteristics, such as heat resistance, than a tubular article containing a related biodegradable resin.

The inventors found that a tubular article obtained by molding an aliphatic polyester-based resin composition in which an aliphatic polyester-based resin (A) containing a repeat unit derived from an aliphatic diol and a repeat unit derived from an aliphatic dicarboxylic acid as main structural units, a polyhydroxyalkanoate (B), and further, an inorganic filler (C) are contained in a predetermined ratio has excellent moldability, high biodegradability at room temperature, excellent marine biodegradability, excellent mechanical properties, such as piercing strength, and excellent heat resistance, leading to this invention.

The second invention is summarized in the following [8] to [16].

[8] A tubular article comprising an aliphatic polyester-based resin composition,

wherein the aliphatic polyester-based resin composition contains an aliphatic polyester-based resin (A) containing a repeat unit derived from an aliphatic diol and a repeat unit derived from an aliphatic dicarboxylic acid as main structural units, a polyhydroxyalkanoate (B), and an inorganic filler (C),
the polyhydroxyalkanoate (B) is a copolymer containing a 3-hydroxybutyrate unit and a 3-hydroxyhexanoate unit as main structural units, and
an amount of the inorganic filler (C) relative to a total amount of the aliphatic polyester-based resin (A), the polyhydroxyalkanoate (B), and the inorganic filler (C) is 5 to 50% by mass.

[9] The tubular article according to [8], wherein the inorganic Filler (C) is one or two or more selected from a group consisting of anhydrous silica, calcium carbonate, talc, and zeolite.

[10] The tubular article according to [8] or [9], wherein a ratio of a repeat unit derived from succinic acid to repeat units derived from all dicarboxylic acids contained in the aliphatic polyester-based resin (A) is 5% by mol or higher and 100% by mol or lower.

[11] The tubular article according to any one of [8] to [10] comprising an injection-molded article.

A straw comprising the tubular article according to any one of [8] to [11].

A cotton swab comprising the tubular article according to any one of [8] to [11].

A stick for balloons comprising the tubular article according to any one of [8] to [11].

A tubular article having an absolute or relative biodegradability of 60% or higher after 100 days in a marine biodegradation test (ASTM D6691) at a sea water temperature of 30°C $\pm$ 2°C.

A straw comprising the tubular article according to [15] . Advantageous Effects of Invention

The first invention provides a molded article that has a high biodegradation rate at room temperature and has excellent moldability when produced, excellent mechanical properties, such as impact resistance, and excellent characteristics, such as heat resistance. In addition, such a molded article has water vapor barrier properties/oxygen barrier properties when used as a sheet or a container.

The molded article of the first invention has oxygen and water vapor barrier properties and has a high biodegradation rate at room temperature. Thus, such a molded article is expected to be suitably used for food containers, such as coffee packaging and coffee capsules.

The second invention provides a tubular article. Such a tubular article has a high biodegradation rate at room temperature, a high biodegradation rate in sea water (marine biodegradability), excellent moldability, excellent mechanical properties, such as piercing strength, and excellent characteristics, such as heat resistance.

The tubular article of the second invention has a high biodegradation rate at room temperature and further, high marine biodegradability. Accordingly, when the tubular article is used for disposable products, such as straws, cotton swabs, and sticks for balloons, such a tubular article is completely biodegraded in sea water. Therefore, effects on marine creatures are expected to decrease significantly, compared with the effects of convetional plastic products.

Description of Embodiments

Embodiments of the present invention will next be described in detail. However, the present invention is not limited to the following description and can be embodied in various modified forms without departing from the scope of the invention.

In the present description, an expression including "to" between numerical values or physical property values is used to indicate a range including these values sandwiching "to."

In the present description, "% by mass" is the same as "parts by mass," and "% by weight" is the same as "parts by weight."

[First Invention]

A molded article of the first invention contains an aliphatic polyester-based resin composition (hereinafter, such an aliphatic polyester-based resin composition may be referred to as "an aliphatic polyester-based resin composition of the first invention"). The aliphatic polyester-based resin composition contains an aliphatic polyester-based resin (A) containing a repeat unit derived from an aliphatic diol and a repeat unit derived from an aliphatic dicarboxylic acid as main structural units, a polyhydroxyalkanoate (B), and an inorganic filler (C). The polyhydroxyalkanoate (B) is a copolymer containing a 3-hydroxybutyrate unit and a 3-hydroxyhexanoate unit as main structural units. The mass ratio of the aliphatic polyester-based resin (A) to the polyhydroxyalkanoate (B) is 40/60 to 10/90. The amount of the inorganic filler (C) relative to the total amount of the aliphatic polyester-based resin (A), the polyhydroxyalkanoate (B), and the inorganic filler (C) is 15 to 50% by mass.

In the first invention and the second invention described below, the aliphatic diol is a compound in which two hydroxy groups are bonded to an aliphatic hydrocarbon group. The aliphatic hydrocarbon group used is generally a liner aliphatic hydrocarbon group but may have a branched structure, may have a cyclic structure, and may have a plurality of these structures.

The aliphatic dicarboxylic acid is a compound in which two carboxyl groups are bonded to an aliphatic hydrocarbon group. The aliphatic hydrocarbon group used is generally a linear aliphatic hydrocarbon group, but may have a branched structure, may have a cyclic structure, and may have a plurality of these structures.

The aliphatic polyester-based resin (A) contained in the aliphatic polyester-based resin composition in the first invention and the second invention described below is a polymer having repeating units. Each of the repeating units is derived from a specific compound and referred to as a compound unit of this compound. For example, a repeating unit derived from an aliphatic diol is referred to as an "aliphatic diol unit," and a repeating unit derived from an aliphatic dicarboxylic acid is referred to as an "aliphatic dicarboxylic acid unit."

The "main constituent units" in the aliphatic polyester-based resin (A) are generally constituent units contained in the aliphatic polyester-based resin (A) in a total amount of 80% by mass or more. The aliphatic polyester-based resin (A) may not contain a constituent unit other than the main constituent units at all. This is also the case for the "main constituent unit" in the polyhydroxyalkanoate (B).

[Mechanism]

The aliphatic polyester-based resin (A) and the polyhydroxyalkanoate (B) contained in the aliphatic polyester-based resin composition of the first invention have high biodegradability at room temperature. Therefore, the molded article of the present invention, which contains the aliphatic polyester-based resin composition of the present invention including the aliphatic polyester-based resin (A) and the polyhydroxyalkanoate (B) as resin components is excellent in biodegradability.

By using the aliphatic polyester-based resin (A) and polyhydroxyalkanoate (B) in combination at a prescribed mixing ratio, moldability can be improved.

A sufficient water vapor barrier property and oxygen barrier property can not be obtained by using only the aliphatic polyester-based resin (A) and the polyhydroxyalkanoate (B). However, as the aliphatic polyester-based resin composition of the first invention contains the inorganic filler (C), water vapor barrier property and oxygen barrier property are improved.

When the inorganic filler (C) is added, the surface area of the molded article increases. In addition, as biodegradation proceeds, the inorganic filler falls off from the molded article, and thus, the area in contact with a degrading enzyme produced by microorganisms increases. Therefore, an effect of increasing the biodegradation rate of the aliphatic polyester-based resin (A) and the polyhydroxyalkanoate (B) is obtained.

The inorganic filler (C) also functions as a nucleating agent and acts effectively in improving moldability. Therefore, when the inorganic filler (C) is contained in a predetermined ratio, a molded article having excellent biodegradability can be provided with good moldability and productivity.

[Aliphatic polyester-based resin composition]

A description will next be given of the aliphatic polyester-based resin composition in the first invention containing the aliphatic polyester-based resin (A), the polyhydroxyalkanoate (B), and the inorganic filler (C).

<Aliphatic polyester-based resin (A)>

The aliphatic polyester-based resin (A) is an aliphatic polyester-based resin including an aliphatic diol unit and an aliphatic dicarboxylic acid unit as main constituent units.

In the polyester-based resin (A), the ratio of a succinic acid unit to all dicarboxylic acid units is preferably from 5% by mole to 100% by mole inclusive. The polyester-based resin (A) may be a mixture of aliphatic polyester-based resins containing different amounts of the succinic acid unit. For example, an aliphatic polyester-based resin not containing aliphatic dicarboxylic acid units other than succinic acid (containing only the succinic acid unit as the aliphatic dicarboxylic acid unit) and an aliphatic polyester-based resin containing an aliphatic dicarboxylic acid unit other than succinic acid may be mixed such that the amount of the succinic acid unit in the polyester-based resin (A) used is adjusted within the above preferred range.

Specifically, the polyester-based resin (A) is a polyester-based resin including an aliphatic diol unit represented by the following formula (1) and an aliphatic dicarboxylic acid unit represented by the following formula (2).

$$— O—R^1—O— \qquad (1)$$

$$— OC—R^2—CO— \qquad (2)$$

In formula (1), $R^1$ represents a divalent aliphatic hydrocarbon group. In formula (2), $R^2$ represents a divalent aliphatic hydrocarbon group. The aliphatic diol unit and the aliphatic dicarboxylic acid unit represented by formulas (1) and (2) may be derived from compounds derived from petroleum, may be derived from compounds derived from plant raw materials, but are preferably derived from compounds derived from plant raw materials.

When the polyester-based resin (A) is a copolymer, the polyester-based resin (A) may contain two or more aliphatic diol units represented by formula (1) or may contain two or more aliphatic dicarboxylic acid units represented by formula (2).

Preferably, the aliphatic dicarboxylic acid unit represented by formula (2) includes a succinic acid unit in an amount of from 5% by mole to 100% by mole inclusive based on the total amount of dicarboxylic acid units. When the amount of the succinic acid unit in the polyester-based resin (A) is in the above prescribed range, the biodegradable resin composition is improved in moldability, heat resistance and degradability. For the same reason, the amount of the succinic acid unit in the polyester-based resin (A) is preferably 10% by mole or more, more preferably 50% by mole or more, still more preferably 64% by mole or more, and particularly preferably 68% by mole based on the total amount of the dicarboxylic acid units.

The ratio of the amount of the succinic acid unit to the total amount of the dicarboxylic acid units in the polyester-based resin (A) may be hereinafter referred to as the "amount of the succinic acid unit."

More preferably, the aliphatic dicarboxylic acid unit represented by formula (2) includes, in addition to succinic acid, at least one aliphatic dicarboxylic acid unit in an amount of from 5% by mole to 50% by mole inclusive based on the total amount of the dicarboxylic acid units. By using the aliphatic dicarboxylic acid unit other than succinic acid in an amount within the above prescribed range for copolymerization, the crystallization temperature of the polyester-based resin (A) can be reduced, and therefore the biodegradation rate can be increased. For the same reason, the amount of the aliphatic dicarboxylic acid unit other than succinic acid in the polyester-based resin (A) is preferably from 10% by mole to 45% by mole inclusive and more preferably from 15% by mole and 40% by mole inclusive based on the total amount of the dicarboxylic acid units.

No particular limitation is imposed on the aliphatic diol that provides the diol unit represented by formula (1). From the viewpoint of moldability and mechanical strength, the aliphatic diol is preferably an aliphatic diol having 2 to 10 carbon atoms and particularly preferably an aliphatic diol having 4 to 6 carbon atoms. Examples of such an aliphatic diol include ethylene glycol, 1,3-propanediol, 1,4-butanediol, and 1,4-cyclohexanedimethanol. Of these, 1,4-butanediol is particularly preferable. Two or more aliphatic diols may be used.

No particular limitation is imposed on the aliphatic dicarboxylic acid component that provides the aliphatic dicarboxylic acid unit represented by formula (2). The aliphatic dicarboxylic acid component is preferably an aliphatic dicarboxylic acid having 2 to 40 carbon atoms or a derivative thereof such as an alkyl ester and particularly preferably an aliphatic dicarboxylic acid having 4 to 10 carbon atoms or a derivative thereof such as an alkyl ester. Examples of the aliphatic dicarboxylic acid other than succinic acid and having 4 to 10 carbon atoms and derivatives thereof such as alkyl esters thereof include adipic acid, suberic acid, sebacic acid, dodecanedioic acid, dimer acid, and derivatives thereof such as alkyl esters thereof. Of these, adipic acid, and sebacic acid are preferred, and adipic acid is particularly preferred. Two or more aliphatic dicarboxylic acid components may be used. In this case, a combination of succinic acid and adipic acid is preferred.

The polyester-based resin (A) may have a repeating unit derived from an aliphatic oxycarboxylic acid (an aliphatic oxycarboxylic acid unit). Specific examples of the aliphatic oxycarboxylic acid component that provides the aliphatic oxycarboxylic acid unit include lactic acid, glycolic acid, 2-hydroxy-n-butyric acid, 2-hydroxycaproic acid, 6-hydroxycaproic acid, 2-hydroxy-3,3-dimethylbutyric acid, 2-hydroxy-3-methylbutyric acid, 2-hydroxyisocaproic acid, derivatives thereof such as lower alkyl esters thereof and intramolecular esters thereof. When they have optical isomers, any of a D-form, an L-form, and a racemate may be used. The aliphatic oxycarboxylic acid component may be in the form of a solid, a liquid, or an aqueous solution. Of these, lactic acid, glycolic acid, and derivatives thereof are particularly preferred. One of the aliphatic oxycarboxylic acids may be used alone, or a mixture of two or more may be used.

When the polyester-based resin (A) includes any of these aliphatic oxycarboxylic acid units, the content thereof with the total amount of all the constituent units forming the polyester-based resin (A) set to 100% by mole is preferably 20% by mole or less, more preferably 10% by mole or less, still more preferably 5% by mole or less, and most preferably 0% by mole (the polyester-based resin (A) includes no aliphatic oxycarboxylic acid unit), from the viewpoint of moldability.

The polyester-based resin (A) may be prepared by copolymerizing a trifunctional or higher-functional aliphatic polyol with a trifunctional or higher-functional aliphatic polyvalent carboxylic acid, an acid anhydride thereof, or a trifunctional or higher-functional aliphatic polyvalent oxycarboxylic acid component, in order to increase melt viscosity.

Specific examples of the trifunctional aliphatic polyol include trimethylolpropane and glycerin, and specific examples of the tetrafunctional aliphatic polyol include pentaerythritol. One of them may be used alone, or a mixture of two or more may be used.

Specific examples of the trifunctional aliphatic polyvalent carboxylic acid and the acid anhydride thereof include propanetricarboxylic acid and acid anhydrides thereof, and specific examples of the tetrafunctional polyvalent carboxylic acid and the acid anhydride thereof include cyclopentanetetracarboxylic acid and acid anhydrides thereof. One of them may be used alone, or a mixture of two or more may be used.

The trifunctional aliphatic oxycarboxylic acids are classified into (i) a type in which two carboxyl groups and one hydroxyl group are present in one molecule and (ii) a type in which one carboxyl group and two hydroxyl groups are present in one molecule. Any of these types may be used. From the viewpoint of moldability, mechanical strength, and the appearance of a molded article, (i) the type in which two carboxyl groups and one hydroxyl group are present in one molecule, such as malic acid, is preferred, and, more particularly, malic acid is used preferably.

The tetrafunctional aliphatic oxycarboxylic acid components are classified into (i) a type in which three carboxyl groups and one hydroxyl group are present in one molecule, (ii) a type in which two carboxyl groups and two hydroxyl groups are present in one molecule, and (iii) a type in which three hydroxyl groups and one carboxyl group are present in one molecule. Any of these types can be used. It is preferable to use a tetrafunctional aliphatic oxycarboxylic acid component having a plurality of carboxyl groups, and more specific examples include citric acid and tartaric acid. One of them may be used alone, or a mixture of two or more may be used.

When the polyester-based resin (A) includes a constituent unit derived from the above-described trifunctional or higher-functional component, the lower limit of the content thereof with the total amount of all the constituent units forming the aliphatic polyester-based resin (A) set to 100% by mole is generally 0% by mole or more and preferably 0.01% by mole or more, and the upper limit is generally 5% by mole or less and preferably 2.5% by mole or less.

To produce the aliphatic polyester-based resin (A), a well-known polyester production method can be used. In this case, no particular limitation is imposed on the polycondensation reaction, and appropriate conditions conventionally used may be used. Generally, a method including allowing the esterification reaction to proceed and performing a pressure-reducing operation to further increase the degree of polymerization is used.

When the diol component forming the diol unit is reacted with the dicarboxylic acid component forming the dicarboxylic acid unit to produce the aliphatic polyester-based resin (A), the amount of the diol component used and the amount of the dicarboxylic acid component used are set such that the aliphatic polyester-based resin (A) to be produced has an intended composition. Generally, the diol component is reacted with substantially an equimolar amount of the dicarboxylic acid component. However, since the diol component is distilled during the esterification reaction, the diol component is generally used in an amount larger by 1 to 20% by mole than the amount of the dicarboxylic acid component.

When the aliphatic polyester-based resin (A) contains components (optional components) other than the essential components, such as the aliphatic oxycarboxylic acid unit and the polyfunctional component, compounds (monomers or oligomers) corresponding to the aliphatic oxycarboxylic acid unit and the polyfunctional component unit are reacted such that an intended composition is obtained. In this case, no particular limitation is imposed on the timing at which the optional components are introduced into the reaction system and the method for introducing the optional components. The timing and the method can be freely selected so long as an aliphatic polyester-based resin (A) preferable for the present invention can be produced.

For example, no particular limitation is imposed on the timing and method for introducing the aliphatic oxycarboxylic acid into the reaction system so long as the aliphatic oxycarboxylic acid is introduced before the diol component and the dicarboxylic acid component are subjected to the polycondensation reaction. Examples of the method include (1) a method in which an aliphatic oxycarboxylic acid solution with a catalyst dissolved therein in advance is mixed and (2) a method in which the aliphatic oxycarboxylic acid is mixed simultaneously with introduction of the catalyst into the reaction system at the time of charging of the raw materials.

As for the timing for introducing the compound forming the polyfunctional component unit, the compound may be charged together with other monomers or oligomers at the beginning of polymerization or may be charged after transesterification but before the start of pressure reduction. Preferably, from the viewpoint of simplification of the process, the compound is charged together with the other monomers or oligomers.

Generally, the aliphatic polyester-based resin (A) is produced in the presence of a catalyst. Any of catalysts that can be used to produce well-known polyester-based resins can be freely selected so long as the effects of the present invention are not significantly impaired. Preferred examples of the catalyst include compounds of metals such as germanium, titanium, zirconium, hafnium, antimony, tin, magnesium, calcium, and zinc. Of these, germanium compounds and titanium compounds are preferred.

Examples of the germanium compounds that can be used as the catalyst include organic germanium compounds such as tetraalkoxy germanium and inorganic germanium compounds such as germanium oxide and germanium chloride. Of these, from the viewpoint of cost and availability, germanium oxide, tetraethoxy germanium, tetrabutoxy germanium, etc. are preferred, and germanium oxide is particularly preferred.

Examples of the titanium compounds that can be used as the catalyst include organic titanium compounds such as tetraalkoxy titaniums such as tetrapropyl titanate, tetrabutyl titanate, and tetraphenyl titanate. Of these, from the viewpoint of cost and availability, tetrapropyl titanate, tetrabutyl titanate, etc. are preferred.

Another catalyst may be used in combination so long as the object of the present invention is not impaired.

One of these catalysts may be used alone, or any combination of two or more may be used at any ratio.

The catalyst may be used in any amount so long as the effects of the present invention are not significantly impaired. The amount of the catalyst relative to the amount of the monomers used is generally 0.0005% by mass or more and more preferably 0.001% by mass or more and is generally 3% by mass or less and preferably 1.5% by mass or less. If the amount of the catalyst is lower than the lower limit in the above range, the effect of the catalyst may not be obtained. If the amount of the catalyst is higher than the upper limit in the above range, the cost of production may increase, and the polymer obtained may be colored significantly. Moreover, a reduction in hydrolysis resistance may occur.

No particular limitation is imposed on the timing for introducing the catalyst so long as the catalyst is introduced before the polycondensation reaction. The catalyst may be introduced at the time of charging of the raw materials or before the start of pressure reduction. When the aliphatic oxycarboxylic acid unit is introduced into the aliphatic polyester-based resin (A), it is preferable to use a method in which the catalyst is introduced together with a monomer or oligomer forming the aliphatic oxycarboxylic acid unit such as lactic acid or glycolic acid at the time of charging of the raw materials or a method in which the catalyst dissolved in an aqueous aliphatic oxycarboxylic acid solution is introduced. It is particularly preferable to use the method in which the catalyst dissolved in the aqueous aliphatic oxycarboxylic acid solution is introduced because the rate of polymerization increases.

The reaction conditions such as temperature, polymerization time, and pressure when the aliphatic polyester-based resin (A) is produced are freely set so long as the effects of the present invention are not significantly impaired. The lower limit of the reaction temperature of the esterification reaction and/or transesterification of the dicarboxylic acid component and the diol component is generally 150°C or higher and preferably 180°C or higher, and the upper limit is generally 260°C or lower and preferably 250°C or lower. The reaction atmosphere is generally an inert atmosphere such as nitrogen or argon. The reaction pressure is generally normal atmospheric pressure to 10 kPa and is preferably normal atmospheric pressure. The lower limit of the reaction time is 1 hour or longer, and the upper limit is generally 10 hours of shorter, preferably 6 hours or shorter, and more preferably 4 hours or shorter.

If the reaction temperature is excessively high, unsaturated bonds are generated excessively. In this case, gelation due to the unsaturated bonds may occur, so that it may be difficult to control the polymerization.

Preferably, the polycondensation reaction after the esterification reaction and/or transesterification of the dicarboxylic acid component and the diol component is performed in a vacuum. As for the degree of vacuum, the lower limit of the pressure of the vacuum is generally $0.01 \times 10^3$ Pa or higher and preferably $0.03 \times 10^3$ Pa or higher, and the upper limit is generally $1.4 \times 10^3$ Pa or lower and preferably $0.4 \times 10^3$ Pa or lower. The lower limit of the reaction temperature in this case is generally 150°C or higher and preferably 180°C or higher, and the upper limit is generally 260°C or lower and preferably 250°C or lower. The lower limit of the reaction time is generally 2 hours or longer, and the upper limit is generally 15 hours or shorter and preferably 10 hours or shorter.

If the reaction temperature is excessively high, unsaturated bonds are generated excessively. In this case, gelation due to the unsaturated bonds may occur, so that it may be difficult to control the polymerization.

To produce the aliphatic polyester-based resin (A), a chain extender such as a carbonate compound or a diisocyanate compound may be used. In this case, the amount of the chain extender, i.e., the ratio of carbonate bonds or urethane bonds in the polyester-based resin (A) with the total amount of all the constituent units forming the aliphatic polyester-based resin (A) set to 100% by mole, is generally 10% by mole or less, preferably 5% by mole or less, and more preferably 3% by mole or less. However, when urethane bonds or carbonate bonds are present in the aliphatic polyester-based resin (A), there is a possibility that the biodegradability may be impaired. Therefore, in the present invention, the amount of the carbonate bonds based on the total amount of all the constituent units forming the aliphatic polyester-based resin (A) is less than 1% by mole, preferably 0.5% by mole or less, and more preferably 0.1% by mole or less, and the amount of the urethane bonds is 0.55% by mole or less, preferably 0.3% by mole or less, more preferably 0.12% by mole or less, and still more preferably 0.05% by mole or less. This amount in terms of parts by mass based on 100 parts by mass of the aliphatic polyester-based resin (A) is 0.9 parts by mass or less, preferably 0.5 parts by mass or less, more preferably 0.2 parts by mass or less, and still more preferably 0.1 parts by mass or less. In particular, if the amount of the urethane bonds is higher than the above upper limit, the urethane bonds may dissociate in a film formation process etc., and smoke and odors from a molten film through an outlet of a die may cause a problem. Moreover, foaming in the molten film may cause the film to be cut, so that the film may not be formed stably.

The amount of the carbonate bonds and the amount of the urethane bonds in the aliphatic polyester-based resin (A) can be determined by computation using the results of NMR measurement such as $^1$H—NMR measurement or $^{13}$C—NMR measurement.

Specific examples of the carbonate compound used as the chain extender include diphenyl carbonate, ditolyl carbonate, bis(chlorophenyl)carbonate, m-cresyl carbonate, dinaphthyl carbonate, dimethyl carbonate, diethyl carbonate, dibutyl carbonate, ethylene carbonate, diamyl carbonate, and dicyclohexyl carbonate. Moreover, carbonate compounds derived from hydroxy compounds such as phenols and alcohols and including one or different types of hydroxy compounds are also usable.

Specific examples of the diisocyanate compound include well-known diisocyanates such as 2,4-tolylene diisocyanate, a mixture of 2,4-tolylene diisocyanate and 2,6-tolylene diisocyanate, 1,5-naphthylene diisocyanate, xylylene diisocyanate, hydrogenated xylylene diisocyanate, hexamethylene diisocyanate, isophorone diisocyanate, 4,4'-dicyclohexylmethane diisocyanate, tetramethylxylylene diisocyanate, 2,4,6-triisopropylphenyl diisocyanate, 4,4'-diphenylmethane diisocyanate, and tolidine diisocyanate.

Moreover, dioxazoline, silicic acid esters, etc. may be used as additional chain extenders.

Specific examples of the silicic acid esters include tetramethoxysilane, dimethoxydiphenylsilane, dimethoxydimethylsilane, and diphenyldihydroxysilane.

A high-molecular weight polyester-based resin using any of these chain extenders (coupling agents) can be produced using a conventional technique. The chain extender in a homogeneously molten state is added to the reaction system without using a solvent after completion of polycondensation and is reacted with the polyester obtained by the polycondensation.

More specifically, a polyester-based resin having an increased molecular weight can be obtained by reacting the chain extender with a polyester that is obtained by a catalytic reaction of the diol component and the dicarboxylic acid component, has substantially a hydroxyl group as a terminal group, and has a weight average molecular weight (Mw) of 20,000 or more and preferably 40,000 or more. With a prepolymer having a weight average molecular weight of 20,000 or more together with the use of a small amount of the chain extender, a high-molecular weight polyester-based resin can be produced even under severe conditions such as a molten state because the prepolymer is not influenced by the remaining catalyst. The weight average molecular weight (Mw) of the polyester-based resin is determined as a value converted using monodispersed polystyrenes from a measurement value by gel permeation chromatography (GPC) using chloroform as a solvent at a measurement temperature of 40°C.

When, for example, the above diisocyanate compound serving as the chain extender is used to further increase the molecular weight of the polyester-based resin, it is preferable to use a prepolymer having a weight average molecular weight of 20,000 or more and preferably 40,000 or more. If the weight average molecular weight of the prepolymer is less than 20, 000, the amount of the diisocyanate compound used to increase the molecular weight increases, and this may cause a reduction in heat resistance. When the above prepolymer is used, a polyester-based resin having urethane bonds derived from the diisocyanate compound and having a linear structure in which prepolymer molecules are linked through the urethane bonds is produced.

The pressure during chain extension is generally from 0.01 MPa to 1 MPa inclusive, preferably from 0.05 MPa to 0.5 MPa inclusive, and more preferably from 0.07 MPa to 0.3 MPa inclusive and is most preferably normal atmospheric pressure.

The lower limit of the reaction temperature during chain extension is generally 100°C or higher, preferably 150°C or higher, more preferably 190°C or higher, and most preferably 200°C or higher, and the upper limit is generally 250°C or lower, preferably 240°C or lower, and more preferably 230°C or lower. If the reaction temperature is excessively low, the viscosity is high, and it is difficult for the reaction to proceed uniformly. Moreover, a high stirring power tends to be required. If the reaction temperature is excessively high, gelation and decomposition of the polyester-based resin tend to occur.

The lower limit of the chain extension time is generally 0.1 minutes or longer, preferably 1 minute or longer, and more preferably 5 minutes or longer, and the upper limit is 5 hours or shorter, preferably 1 hour or shorter, more preferably 30 minutes or shorter, and most preferably 15 minutes or shorter. If the chain extension time is excessively short, the effect of the addition of the chain extender tends not to be obtained. If the chain extension time is excessively long, the gelation and decomposition of the polyester-based resin tend to occur.

As for the molecular weight of the aliphatic polyester-based resin (A) used in the first invention, its weight average molecular weight (Mw) determined from a measurement value by gel permeation chromatography (GPC) using monodispersed polystyrene reference materials is generally from 10,000 to 1,000,000 inclusive. The weight average molecular weight (Mw) of the aliphatic polyester-based resin (A) used in the first invention is preferably from 20, 000 to 500,000 inclusive and more preferably from 50, 000 to 400,000 inclusive because such a weight average molecular weight is advantageous in terms of moldability and mechanical strength.

The melt flow rate (MFR) of the aliphatic polyester-based resin (A) used in the first invention that is measured at 190°C and a load of 2.16 kg according to JIS K7210 (1999) is generally from 0.1 g/10 minutes to 100 g/10 minutes inclusive. From the viewpoint of moldability and mechanical strength, the MFR of the aliphatic polyester-based resin (A) used in the first invention is preferably 50 g/10 minutes or less and particularly preferably 40 g/10 minutes or less. The MFR of the aliphatic polyester-based resin (A) can be controlled by changing its molecular weight.

The melting point of the aliphatic polyester-based resin (A) used in the first invention is preferably 70°C or higher and more preferably 75°C or higher and is preferably 170°C or lower, more preferably 150°C or lower, and particularly preferably lower than 130°C. When the aliphatic polyester-based resin (A) has a plurality of melting points, it is preferable that at least one of the melting points falls within the above range.

The elastic modulus of the aliphatic polyester-based resin (A) used in the first invention is preferably 180 to 1000 MPa. If the melting point is outside the above range, the moldability is poor. If the elastic modulus is less than 180 MPa, problems tend to occur in moldability and processability. If the elastic modulus exceeds 1000 MPa, impact resistance tends to deteriorate.

No particular limitation is imposed on the methods for adjusting the melting point and elastic modulus of the aliphatic polyester-based resin (A). The melting point and the elastic modulus can be adjusted, for example, by selecting the type of copolymerizing component of the aliphatic dicarboxylic acid component other than succinic acid, adjusting the copolymerizing ratio, or combining them.

The aliphatic polyester resin (A) used may be a commercial product. "BioPBS (registered trademark) FZ71PB," "BioPBS (registered trademark) FZ71PB," "BioPBS (registered trademark) FZ71PM," "BioPBS (registered trademark) FZ91PB," "BioPBS (registered trademark) FZ91PM," "BioPBS (registered trademark) FD92PB," and "BioPBS (registered trademark) FD92PM" all manufactured by PTTMCC Biochem can be used.

The number of aliphatic polyester resins (A) used is not limited to one, and two or more aliphatic polyester resins (A) that differ in types of constituent units, the ratio of the constituent units, production method, physical properties, etc. may be mixed and used.

<Polyhydroxyalkanoate (B)>

The polyhydroxyalkanoate (hereinafter may be referred to as PHA) (B) is an aliphatic polyester including a repeating unit represented by a general formula: [—CHR—CH$_2$—CO—O—] (wherein R is an alkyl group having 1 to 15 carbon atoms). The polyhydroxyalkanoate (B) is a copolymer containing a 3-hydroxybutyrate unit and a 3-hydroxyhexanoate unit as main structural units.

From the viewpoint of moldability and thermal stability, the polyhydroxyalkanoate (B) includes, as a structural component, the 3-hydroxybutyrate unit in an amount of preferably 80% by mole or more and more preferably 85% by mole or more. Preferably, the polyhydroxyalkanoate (B) is produced by microorganisms.

Specific examples of the polyhydroxyalkanoate (B) include poly(3-hydroxybutyrate-co-3-hydroxyhexanoate) copolymer resins, and
poly(3-hydroxybutyrate-co-3-hydroxyvalerate-co-3-hydroxyhexa noate) copolymer resins.

From the viewpoint of moldability, processability, and physical properties of the molded article to be obtained, the polyhydroxyalkanoate (B) is preferably a poly(3-hydroxybutyrate-co-3-hydroxyhexanoate) copolymer resin, that is PHBH.

In the polyhydroxyalkanoate (B), the constituent ratio of 3-hydroxybutyrate (hereinafter may be referred to as 3HB) to a copolymerized comonomer such as 3-hydroxyhexanoate (hereinafter referred to as 3HH), i.e., the monomer ratio in the copolymer resin, is preferably 3-hydroxybutyrate/comonomer=97/3 to 80/20 (% by mole/% by mole) and more preferably 95/5 to 85/15 (% by mole/% by mole), from the viewpoint of moldability, processability, the quality of a molded article, etc. If the comonomer ratio is less than 3% by mole, the molding temperature is close to thermal decomposition temperature, and it may be difficult to perform molding. If the comonomer ratio exceeds 20% by mole, crystallization of the polyhydroxyalkanoate (B) slows down, so that the productivity may deteriorate.

The ratios of the monomers in the polyhydroxyalkanoate (B) can be measured by gas chromatography as follows.

2 mL of a sulfuric acid/methanol mixture (15/85 (mass ratio)) and 2 mL of chloroform are added to about 20 mg of dry PHA, and the resulting mixture is hermetically sealed and heated at 100°C for 140 minutes to thereby obtain a methyl ester of a PHA decomposition product. After cooling, 1.5 g of sodium hydrogencarbonate is gradually added to the methyl ester for neutralization, and the mixture is left to stand until generation of carbon dioxide gas is stopped. Then 4 mL of diisopropyl ether is added, and the mixture is well mixed. The composition of the monomer units of the PHA decomposition product in the supernatant is analyzed by capillary gas chromatography to thereby determine the ratios of the monomers in the copolymer resin.

The weight average molecular weight (hereinafter may be referred to as Mw) of the polyhydroxyalkanoate (B) is determined from a measurement value by gel permeation chromatography (GPC) using monodispersed polystyrene reference materials and is generally from 200,000 to 2,500,000 inclusive. The weight average molecular weight (Mw) of the polyhydroxyalkanoate (B) is preferably from 250,000 to 2,000,000 inclusive and more preferably from 300,000 to 1,000,000 inclusive because such a weight average molecular weight is advantageous in terms of moldability and mechanical strength. If the weight average molecular weight is less than 200,000, the mechanical properties etc. may be poor. If the weight average molecular weight exceeds 2,500,000, it may be difficult to perform molding.

The melt flow rate (MFR) of the polyhydroxyalkanoate (B) that is measured at 190°C and a load of 2.16 kg according to JIS K7210 (1999) is preferably from 1 g/10 minutes to 100 g/10 minutes inclusive. From the viewpoint of moldability and mechanical strength, the MFR of the polyhydroxyalkanoate (B) is more preferably 80 g/10 minutes or less and particularly preferably 50 g/10 minutes or less. The MFR of the polyhydroxyalkanoate (B) can be controlled by changing its molecular weight.

The melting point of the polyhydroxyalkanoate (B) is preferably 100°C or higher and more preferably 120°C or higher and is preferably 180°C or lower, more preferably 170°C or lower, and particularly preferably lower than 160°C. When the polyhydroxyalkanoate (B) has a plurality of melting points, it is preferable that at least one of the melting points falls within the above range.

The polyhydroxyalkanoate (B) is produced using microorganisms such as Alcaligenes eutrophus AC32 strain produced by introducing a PHA synthetic enzyme gene derived from Aeromonas caviae into Alcaligenes eutrophus (international deposit under the Budapest Treaty, international depositary authority: International Patent Organism Depositary, National Institute of Advanced Industrial Science and Technology (Central 6, 1-1-1 Higashi, Tsukuba, Ibaraki, Japan), date of original deposit: August 12 Heisei 8, transferred on August 7 Heisei 9, accession number: FERM BP-6038 (transferred from original deposit (FERM P-15786)) (J. Bacteriol., 179, 4821 (1997)).

The polyhydroxyalkanoate (B) used may be a commercial product. For example, "Aonilex (registered trademark) X131N," "Aonilex (registered trademark) X131A," "Aonilex (registered trademark) 151A," "Aonilex (registered trademark) 151C," "PHBH (registered trademark) X331N," "PHBH (registered trademark) X131A," "PHBH (registered trademark) 151A," and "PHBH (registered trademark) 151C" all manufactured by Kaneka Corporation may be used as the commercial product of the polyhydroxyalkanoate (B) including, as main constituent units, the 3-hydroxybutyrate unit and the 3-hydroxyhexanoate unit.

The number of polyhydroxyalkanoates (B) is not limited to one, and two or more polyhydroxyalkanoates (B) that differ in types of constituent units, the ratio of the constituent units, production method, physical properties, etc. may be mixed and used.

<Inorganic filler (C)>

Examples of the inorganic filler (C) include anhydrous silica, isinglass, talc, mica, clay, titanium oxide, calcium carbonate, diatomaceous earth, allophane, bentonite, potassium titanate, zeolite, sepiolite, smectite, kaolin, kaolinite, glass, limestone, carbon, wollastonite, calcined pearlite, silicates such as calcium silicate and sodium silicate, aluminum oxide, magnesium carbonate, hydroxides such as calcium hydroxide, and salts such as ferric carbonate, zinc oxide, iron oxide, aluminum phosphate, and barium sulfate. Of these, talc, calcium carbonate, and zeolite are preferred.

Inorganic fillers such as calcium carbonate and limestone have the properties of a soil conditioner. If a molded article made of an aliphatic polyester-based resin composition containing a particularly large amount of such an inorganic filler and further containing the polyester-based resin (A) derived from a biomass and the polyhydroxyalkanoate (B) is thrown into soil, the inorganic filler (C) remains after the decomposition and functions as a soil conditioner, so that the advantage of the aliphatic polyester-based resin composition as a biodegradable resin can be increased.

Inorganic fillers (C) can be classified by their shape. The inorganic fillers (C) include fiber-like inorganic fillers, powder-like inorganic fillers, plate-shaped inorganic fillers, and needle-shaped inorganic fillers. Powder-like inorganic fillers and plate-shaped inorganic fillers are preferred, and plate-shaped inorganic fillers are particularly preferred. Examples of the plate-shaped fillers include talc, kaolin, mica, clay, sericite, glass flakes, synthesized hydrotalcite, various metal foils, graphite, molybdenum disulfide, tungsten disulfide, boron nitride, plate-shaped iron oxide, plate-shaped calcium carbonate, plate-shaped aluminum hydroxide, and zeolite. From the viewpoint of increasing the ease of mixing, stiffness, injection moldability, decomposability, and deodorization effects and improving moisture permeability such as water vapor permeability, it is preferable to use talc, mica, clay calcium carbonate, or zeolite.

By reason of handleability, the average particle diameter of the inorganic filler (C) is preferably 0.5 μm or more, more preferably 0.6 μm or more, still more preferably 0.7 μm or more, and particularly preferably 1.0 μm or more. The average particle diameter of the inorganic filler (C) is preferably 50 μm or less, more preferably 30 μm or less, and still more preferably 20 μm or less.

No particular limitation is imposed on the method for measuring the average particle diameter of the inorganic filler (C). Specific examples of the measurement method include a method including determining the specific surface area per gram of the powder measured using a powder specific surface area measuring device SS-100 manufactured by SHIMADZU CORPORATION (a constant pressure air permeability method) and computing the average particle diameter of the filler using the following formula from the results of the measurement of the specific surface area based on the air permeability method according to JIS M-8511.

Average particle diameter (μm) = 10000 × {6/(specific gravity of filler × specific surface area)}

One inorganic filler (C) may be used alone, or any combination of two or more at any ratio may be used.

Specific examples of the talc preferably usable as the inorganic filler (C) include MICRO ACE manufactured by NIPPON TALC CO., LTD. and MG113 and MG115 manufactured by FUJI TALC INDUSTRIAL CO., LTD. Specific examples of calcium carbonate usable as the inorganic filler (C) include SOFTON 1200 and 2200 manufactured by BIHOKU FUNKA KOGYO CO., LTD.

<Mixing ratios of aliphatic polyester-based resin (A), polyhydroxyalkanoate (B), and inorganic filler (C)>

The mass ratio of the aliphatic polyester-based resin (A) to the polyhydroxyalkanoate (B) contained in the aliphatic polyester-based resin composition in the first invention is preferably the aliphatic polyester-based resin (A)/the polyhydroxyalkanoate (B) = 40/60 to 10/90, more preferably 45/55 to 15/80, and still more preferably 50/50 to 20/80. If the amount of the aliphatic polyester-based resin (A) is larger than the above mass ratio range and the amount of the polyhydroxyalkanoate (B) is smaller than the above mass ratio range, the heat resistance is low. If the amount of the aliphatic polyester-based resin (A) is lower and the amount of the polyhydroxyalkanoate (B) is larger, it is difficult to perform molding.

The content of the inorganic filler (C) in the aliphatic polyester-based resin composition in the first invention relative to the total amount of the aliphatic polyester-based resin (A), the polyhydroxyalkanoate (B), and the inorganic filler (C) is preferably 15 to 50% by mass, more preferably 17 to 45% by mass, and still more preferably 20 to 40% by mass. If the content of the inorganic filler (C) is lower than the above lower limit, the water vapor barrier property and the oxygen barrier property obtained by mixing the inorganic filler (C) are not obtained, and the effect of improving the biodegradability and the moldability is not obtained. If the content of the inorganic filler (C) is larger than the above upper limit, mechanical strength such as impact resistance deteriorates.

<Additional resins>

The aliphatic polyester-based resin composition in the first invention may contain one or two or more resins other than the aliphatic polyester-based resin (A) and the polyhydroxyalkanoate (B) such as: synthetic resins such as aromatic polyester-based resins, polycarbonates, polyamides, polystyrenes, polyolefins, acrylic resins, amorphous polyolefins, ABS, AS (acrylonitrilestyrene), polycaprolactones, polyvinyl alcohols, and cellulose esters; and biodegradable resins such as polylactic acid and polybutylene adipate terephthalate (PBAT) that is an aliphatic-aromatic polyester, so long as the effects of the first invention are not impaired.

When the aliphatic polyester-based resin composition in the first invention contains these additional resins, the content of the additional resins is preferably 70 parts by mass or less and particularly preferably 50 parts by mass or less based on 100 parts by mass of the total of the aliphatic polyester-based resin (A), the polyhydroxyalkanoate (B), and the additional resins, in order to effectively obtain the effects of the present invention that are obtained by containing the aliphatic polyester-based resin (A) and the polyhydroxyalkanoate (B) as resin components.

<Additional components>

The aliphatic polyester-based resin composition in the first invention may contain, as "additional components," various additives such as a lubricant, a plasticizer, an antistatic agent, an antioxidant, a light stabilizer, an ultraviolet absorber, a dye, a pigment, an anti-hydrolysis agent, a nucleating agent, an antiblocking agent, a lightproof agent, a plasticizer, a thermal stabilizer, a flame retardant, a release agent, an antifogging agent, a surface wetting improver, an incineration aid, a dispersing aid, various surfactants, and a slipping agent, fine powders of animal/plant materials such as starch, cellulose, paper, wood flour, chitin, chitosan, coconut shell powder, and walnut shell powder, and mixtures thereof.

A functional additive such as a freshness preserving agent or an antimicrobial agent may be added to the aliphatic polyester-based resin composition in the first invention.

These may be optionally added so long as the effects of the first invention are not impaired. One of them may be used alone, or a mixture of two or more may be used.

Generally, the content of these additional components, i.e., the total amount of the components mixed, is preferably from 0.01% by mass to 40% by mass inclusive based on the total amount of the aliphatic polyester-based resin composition in the first invention, in order to prevent deterioration of the physical properties of the aliphatic polyester-based resin composition in the present invention.

Among the additional components, the antifogging agent may be pre-kneaded into the aliphatic polyester-based resin composition or may be applied to the surface of a molded article after molding. Specifically, the antifogging agent used is preferably an ester-based surfactant prepared using a saturated or unsaturated aliphatic carboxylic acid having 4 to 20 carbon atoms and a polyhydric alcohol.

Examples of the slipping agent include unsaturated and saturated aliphatic acid amides prepared from unsaturated and saturated aliphatic acids having 6 to 30 carbon atoms and unsaturated and saturated aliphatic acid bisamides. Most preferred examples of the slipping agent include erucic acid amide, oleic acid amide, stearic acid amide, and bisamides thereof. These may be optionally added so long as the effects of the present invention are not impaired. One of them may be used alone, or a mixture of two or more may be used.

Examples of the antiblocking agent include saturated aliphatic acid amides having 6 to 30 carbon atoms, saturated aliphatic acid bisamides, methylol amide, ethanol amide, natural silica, synthetic silica, synthetic zeolite, and talc.

Specific examples of the lightproof agent include

bis(2,2,6,6-tetramethyl-4-piperidyl)sebacate,
bis(1,2,2,6,6-pentamethyl-4-piperidyl)sebacate,
bis(1-octyloxy-2,2,6,6-tetramethyl-4-piperidyl)sebacate, 2-(3,5-di-t-butyl-4-hydroxyphenyl)-2-n-butyl-bis(2,2,6,6-tetramethyl-4-piperidyl)malonate,
2-(3,5-di-t-butyl-4-hydroxyphenyl)-2-n-butyl-bis(1,2,2,6,6-pentamethyl-4-piperidyl)malonate,
2-(3,5-di-t-butyl-4-hydroxybenzyl)-2-n-butyl-bis(2,2,6,6-tetramethyl-4-piperidyl)malonate,
2-(3,5-di-t-butyl-4-hydroxybenzyl)-2-n-butyl-bis(1,2,2,6,6-pentamethyl-4-piperidyl)malonate,
tetrakis(2,2,6,6-tetramethyl-4-piperidyl)-1,2,3,4-butanetetracarboxylate,
tetrakis(1,2,2,6,6-pentamethyl-4-piperidyl)-1,2,3,4-butanetetracarboxylate, mixed
(2,2,6,6-tetramethyl-4-piperidyl/tridecyl)-1,2,3,4-butanetetracarboxylate, mixed
(1,2,2,6,6-pentamethyl-4-piperidyl/tridecyl)-1,2,3,4-butanetetracarboxylate, mixed
{2,2,6,6-tetramethyl-4-piperidyl/β,β,β',β'-tetramethyl-3,9-[2,4,8,10-tetraoxaspiro[5.5]undecane]diethyl}-1,2,3,4-butanetetracarboxylate, mixed
{1,2,2,6,6-pentamethyl-4-piperidyl/β,β,β',β'-tetramethyl-3,9-[2,4,8,10-tetraoxaspiro[5.5]undecane]diethyl}-1,2,3,4-butanetetracarboxylate,
1,2-bis(3-oxo-2,2,6,6-tetramethyl-4-piperidyl)ethane, 1-(3,5-di-t-butyl-4-hydroxyphenyl)-1,1-bis(2,2,6,6-tetramethyl-4-piperidyloxycarbonyl)pentane,
poly[1-oxyethylene(2,2,6,6-tetramethyl-1,4-piperidyl)oxysuccinyl],
poly[2-(1,1,4-trimethylbutylimino)-4,6-triazinediyl-(2,2,6,6-tetraand-4-piperidyl)iminohexamethylene-(2,2,6,6-tetramethyl-4-piperidyl)imino],
N,N'-bis(3-aminopropyl)ethylenediamine-2,4-bis[N-butyl-N-(2,2,6,6-tetramethyl-4-piperidyl)amino]-6-chloro-1,3,5-triazine condensate, an N-methyl compound thereof, and a polycondensate of succinic acid and 1-(2-hydroxyethyl)-4-hydroxy-2,2,6,6-tetramethylpiperidine.

Of these,
bis(1,2,2,6,6-pentamethyl-4-piperidyl)sebacate and 2-(3,5-di-t-butyl-4-hydroxybenzyl)-2-n-butyl-bis(1,2,2,6,6-pentamethyl-4-piperidyl)malonate are particularly preferred.

Examples of the ultraviolet absorber include benzophenone-based, benzotriazole-based, salicylic acid-based, and cyanoacrylate-based ultraviolet absorbers. Among these ultraviolet absorbers, benzotriazole-based ultraviolet absorbers are preferred, and specific examples include

2-[2-hydroxy-3,5-bis(a,a-dimethylbenzyl)phenyl]-2H-benzotriazole and
2-(4,6-diphenyl-1,3,5-triazin-2-yl)-5-hexyloxy-phenol.

Examples of the antioxidant include: hindered phenol-based antioxidants such as BHT (dibutylhydroxytoluene), 2,2'-methylenebis(4-methyl-6-tert-butylphenol), pentaerythritol

tetrakis[3-(3,5-di-tert-butyl-4-hydroxyphenyl)propionate], 3,3',3'',5,5',5''-hexa-tert-butyl-$\alpha,\alpha',\alpha$''-(mesitylene-2,4,6-triyl)tri-p-cresol,

octadecyl-3-(3,5-di-tert-butyl-4-hydroxyphenyl)propionate, 1,3,5-tris[(4-tert-butyl-3-hydroxy-2,6-xylyl)methyl]-1,3,5-triazine-2,4,6(1H,3H,5H)-trione,

1,3,5-tris(3,5-di-tert-butyl-4-hydroxybenzyl)-1,3,5-triazine -2,4,6(1H,3H,5H)-trione, calcium diethyl bis[{3,5-bis(1,1-dimethylethyl)-4-hydroxyphenyl}methyl]phosp honate, bis(2,2'-dihydroxy-3,3'-di-tert-butyl-5,5'-dimethylphenyl)et hane, and

N,N'-hexane-1,6-diylbis[3-(3,5-di-tert-butyl)-4-hydroxypheny l]propionamide; phosphorous-based antioxidants such as tridecyl phosphite, diphenyldecyl phosphite, tetrakis(2,4-di-tert-butylphenyl)[1,1-biphenyl]-4,4'-diyl bisphosphonate, phosphorous acid bis[2,4-bis(1,1-dimethylethyl)-6-methylphenyl]ethyl ester, and bis(2,4-di-tert-butylphenyl)pentaerythritol diphosphite; lactone-based antioxidants such as a reaction product of 3-hydroxy-5,7-di-tert-butyl-furan-2-one and xylene; sulfur-based antioxidants such as dilauryl thiodipropionate and distearyl thiodipropionate; and mixtures of two or more of these compounds. Of these, hindered phenol-based antioxidants are preferably used.

Preferred examples of the hindered phenol-based antioxidants include: Irganox 3790, Irganox 1330, Irganox 1010, Irganox 1076, Irganox 3114, Irganox 1425WL, Irganox 1098, Irganox HP2225FL, Irganox HP2341, and Irgafos XP-30 (manufactured by BASF); and SUMILIZER BBM-S (manufactured by Sumitomo Chemical Co., Ltd.). The most preferable antioxidants are Irganox 1010 (pentaerythritol

tetrakis[3-(3,5-di-tert-butyl-4-hydroxyphenyl)propionate]) and Irganox 1330 (3,3',3'',5,5',5''-hexa-tert-butyl-$\alpha,\alpha',\alpha$''-(mesitylene-2,4,6-t riyl)tri-p-cresol) .

<Method for producing aliphatic polyester-based resin composition>

The aliphatic polyester-based resin composition in the first invention is produced by mixing the aliphatic polyester-based resin (A), the polyalkanoate (B), the inorganic filler (C), optional additional resins, and optional additional components.

The mixing step is performed by mixing, preferably melt-kneading, the aliphatic polyester-based resin (A), the polyhydroxyalkanoate (B), the inorganic filler (C), the optional additional resins, and the optional additional components at a prescribed ratio simultaneously or in any order using a mixer such as a tumbler, a V blender, a Nauta mixer, a Banbury mixer, kneading rolls, or an extruder.

The kneader used in the mixing step may be a melt kneader. No limitation is imposed on the type of extruder, i.e., any of a twin screw extruder and a single screw extruder may be used. However, a twin screw extruder is more preferred for the purpose of performing melt kneading according to the characteristics of the aliphatic polyester-based resin (A) used, the polyhydroxyalkanoate (B) used, and the inorganic filler (C) used.

The temperature during melt kneading is preferably 120 to 220°C and is more preferably 130 to 160°C. In this temperature range, the time required for the melt reaction can be reduced, and deterioration in color due to degradation of the resin, etc. can be prevented. Moreover, practical physical properties such as impact resistance and resistance to moist heat can be further improved.

From the viewpoint of avoiding degradation of the resin reliably, an unnecessarily long melt kneading time is not preferred. The melt kneading time is preferably from 20 seconds to 20 minutes inclusive and more preferably from 30 seconds to 15 minutes inclusive. It is preferable to set the conditions such as the melt kneading temperature and time such the above melt kneading time is satisfied.

[Molded Article]

The molded article of the first invention is obtained by molding the aliphatic polyester-based resin composition of the first invention.

Examples of the molding method include compression molding (compression molding, lamination molding, stampable molding), injection molding, extrusion or co-extrusion molding (film extrusion using inflation or T-die method, extrusion lamination, pipe extrusion, wire/cable extrusion, profile extrusion), thermal pressing molding, hollow molding (various blow molding methods), calendaring, solid forming (uniaxial stretching, biaxial stretching, rolling, formation of oriented nonwoven cloth, thermoforming (vacuum forming, compression air forming), plastic processing), powder molding (rotation molding), and various nonwoven fabric forming methods (e.g., dry method, adhesion method, entanglement method, spunbond method). Among such methods, injection molding, extrusion molding, compression molding, or thermal pressing molding is suitably used.

Specifically, the molded article of the first invention is preferably used for sheets, films, and containers.

The molded article of the first invention obtained by molding the aliphatic polyester-based resin composition of the first invention may be subjected to various types of secondary processing for the purpose of imparting chemical function, electrical function, magnetic function, mechanical function, frictional/abrasive/lubricating function, optical function, thermal function, and surface function such as biocompatibility. Examples of the secondary processing include embossing, painting, bonding, printing, metalizing (plating etc.), mechanical processing, and surface treatment (such as antistatic treatment, corona discharge treatment, plasma treatment, photochromism treatment, physical vapor deposition, chemical vapor deposition, and coating).

[Applications]

The molded article of the first invention obtained by molding the aliphatic polyester-based resin composition of the first invention is used preferably for a wide variety of applications such as packaging materials for packaging liquid materials, powdery materials, and solid materials such as various foods, chemicals, and sundry goods, agricultural materials, building materials, etc. Specific examples the applications include injection molded articles (such as trays for perishables, coffee capsules, fast food containers, and outdoor leisure products), extrusion molded articles (such as films, fishing lines, fishing nets, slope protecting and greening nets, and water-retaining sheets), and hollow molded articles (such as bottles). Other examples include agricultural films, coating materials, fertilizer coating materials, laminate films, plates, stretched sheets, monofilaments, nonwoven fabrics, flat yarns, staples, crimped fibers, streaked tapes, split yarns, composite fibers, blow bottles, shopping bags, garbage bags, compost bags, cosmetic containers, detergent containers, bleach containers, ropes, binding materials, sanitary cover stock materials, cooler boxes, cushioning films, multifilaments, synthetic paper sheets, and medical materials such as surgical threads, sutures, artificial bones, artificial skins, DDSs such as microcapsules, and wound covering materials.

Furthermore, the molded article of the first invention may be used for information and electronics materials, such as ink binders for thermal transfer and toner binders; electrical device housings; and automobile components including automobile interior components, such as instrument panels, sheets, and pillars, and automobile exterior structural materials, such as bumper, front grilles, and wheel covers. Among various products, the molded article of the first invention is more preferably used for, for example, packaging materials, such as packaging films, bags, trays, capsules, bottles, cushion foams, and foam boxes for fish, and agricultural materials, such as mulching films, tunneling films, films for green houses, awnings, weed prevention sheets, furrow sheets, sprouting sheets, vegetation mats, receptacles for growing plants, and plant pots. The molded article according to the first invention has, for example, excellent mechanical properties, such as impact resistance, tear strength, and stretch at break, and excellent biodegradability. Thus, the molded article is particularly preferably used for films among the above examples.

[Second Invention]

A tubular article of the second invention contains an aliphatic polyester-based resin composition (hereinafter, such an aliphatic polyester-based resin composition may be referred to as "an aliphatic polyester-based resin composition of the second invention"). The aliphatic polyester-based resin composition contains an aliphatic polyester-based resin (A) containing a repeat unit derived from an aliphatic diol and a repeat unit derived from an aliphatic dicarboxylic acid as main structural units, a polyhydroxyalkanoate (B), and an inorganic filler (C). The polyhydroxyalkanoate (B) is a copolymer containing a 3-hydroxybutyrate unit and a 3-hydroxyhexanoate unit as main structural units . The amount of the inorganic filler (C) relative to the total amount of the aliphatic polyester-based resin (A), the polyhydroxyalkanoate (B), and the inorganic filler (C) is 5 to 50% by mass.

The tubular article of the second invention is a tubular article having an absolute or relative biodegradability of 60% or higher at a sea water temperature of 30°C $\pm$ 2°C after 100 days in the marine biodegradability test (ASTM D6691) and is preferably a tubular article obtained by molding the aliphatic polyester-based resin composition of the second invention.

The tubular article of the second invention is suitably used for straws. When used as a straw, such a tubular article is significantly useful as a straw that can be biodegraded in the sea. The higher the biodegradability, the more preferable. The upper limit of the biodegradability is not particularly limited.

[Mechanism]

The aliphatic polyester-based resin (A) and the polyhydroxyalkanoate (B) contained in the aliphatic polyester-based resin composition of the second invention have high biodegradability at room temperature and high biodegradability in the sea. Therefore, the tubular article of the second invention that contains the aliphatic polyester-based resin composition of the second invention containing the aliphatic polyester-based resin (A) and the polyhydroxyalkanoate (B), which are resin constituents, has excellent biodegradability at room temperature and excellent marine biodegradability.

The aliphatic polyester-based resin (A) and the polyhydroxyalkanoate (B) used in combination improve moldability as well as heat resistance.

The aliphatic polyester-based resin composition of the second invention contains the aliphatic polyester-based resin (A), the polyhydroxyalkanoate (B), and further, the inorganic filler (C) in a predetermined ratio. Thus, appropriate stiffness and excellent piercing properties are provided.

The added inorganic filler (C) increases the surface area of the molded article. In addition, when degradation progresses, the inorganic filler is released from the molded article, and thus, the area in contact with a degrading enzyme generated by microorganisms increases. Therefore, an effect that increases the biodegradation rate of the aliphatic polyester-based resin (A) and the polyhydroxyalkanoate (B) is also exhibited.

The inorganic filler (C) also functions as a nucleating agent and effectively improves moldability. When the inorganic filler (C) is contained in a predetermined ratio, a tubular article having further excellent biodegradability at room temperature and marine biodegradability can be provided with good moldability at high productivity.

[Aliphatic Polyester-based Resin Composition]

Hereinafter, the aliphatic polyester-based resin composition of the second invention containing the aliphatic polyester-based resin (A), the polyhydroxyalkanoate (B), and further, the inorganic filler (C) will be described.

<Aliphatic Polyester-based Resin (A)>

The aliphatic polyester-based resin (A) of the second invention containing an aliphatic diol unit and an aliphatic dicarboxylic acid unit as main structural units is the same as the aliphatic polyester-based resin (A) of the first invention. The description of the types and ratio of the structural units and producing method of the aliphatic polyester-based resin (A) of the first invention applies to the aliphatic polyester-based resin (A) of the second invention.

As for the molecular weight of the aliphatic polyester-based resin (A) used in the second invention, its weight average molecular weight (Mw) determined from a measurement value by gel permeation chromatography (GPC) using monodispersed polystyrene reference materials is generally from 10,000 to 1,000,000 inclusive. The weight average molecular weight (Mw) of the aliphatic polyester-based resin (A) used in the second invention is preferably from 20,000 to 500,000 inclusive and more preferably from 50,000 to 400,000 inclusive because such a weight average molecular weight is advantageous in terms of moldability and mechanical strength.

The melt flow rate (MFR) of the aliphatic polyester-based resin (A) used in the second invention that is measured at 190°C and a load of 2.16 kg according to JIS K7210 (1999) is generally from 0.1 g/10 minutes to 100 g/10 minutes inclusive. From the viewpoint of moldability and mechanical strength, the MFR of the aliphatic polyester-based resin (A) used in the second invention is preferably 50 g/10 minutes or less and particularly preferably 30 g/10 minutes or less. The MFR of the aliphatic polyester-based resin (A) can be controlled by changing its molecular weight.

The melting point of the aliphatic polyester-based resin (A) used in the second invention is preferably 70°C or higher and more preferably 75°C or higher and is preferably 170°C or lower, more preferably 150°C or lower, and particularly preferably lower than 130°C. When the aliphatic polyester-based resin (A) has a plurality of melting points, it is preferable that at least one of the melting points falls within the above range.

The elastic modulus of the aliphatic polyester-based resin (A) used in the second invention is preferably 180 to 1000 MPa.

If the melting point is outside the above range, the moldability is poor. If the elastic modulus is less than 180 MPa, problems tend to occur in moldability, processability, and shape retainability. If the elastic modulus exceeds 1000 MPa, the resulting tubular article tends to crack easily.

<Polyhydroxyalkanoate (B)>

The polyhydroxyalkanoate of the second invention is the same as the polyhydroxyalkanoate (B) of the first invention. The description of the copolymer composition ratio and physical properties of the polyhydroxyalkanoate (B) of the first invention applies to the polyhydroxyalkanoate of the second invention.

<Inorganic Filler (C)>

The specific examples of the inorganic filler (C) of the second invention include examples of the inorganic filler (C) of the first invention. The description of, for example, the suitable average particle diameter of the inorganic filler (C) of the first invention applies to the inorganic filler (C) of the second invention.

The inorganic fillers (C) of the first invention can also be classified in accordance with the shape. There are fibrous, spherical, plate-like, and needle-like inorganic fillers. Spherical or plate-like inorganic fillers are preferable. Examples of the spherical fillers include calcium carbonate, spherical silica, spherical glass beads, and graphite. Examples of the plate-like fillers include talc, kaolin, mica, clay, sericite, glass flake, synthetic hydrotalcite, various metal foils, graphite, molybdenum disulfide, tungsten disulfide, boron nitride, plate-like iron oxide, plate-like calcium carbonate, plate-like aluminum hydroxide, and zeolite. To improve ease of mixing, stiffness, moldability, degradability, and deodorizing effect, talc, mica, clay, calcium carbonate, or zeolite is preferable.

<Mixing Ratio of Aliphatic Polyester-based Resin (A), Polyhydroxyalkanoate (B), and Inorganic Filler (C)>

To improve stiffness and from the viewpoint of ease of molding process, the mass ratio of the aliphatic polyester-based resin (A) to the polyhydroxyalkanoate (B) contained in the aliphatic polyester-based resin composition of the second invention, aliphatic polyester-based resin (A)/polyhydroxyalkanoate (B), is preferably 40/60 to 10/90, more preferably 45/55 to 15/85, and still more preferably 50/50 to 20/80. On the other hand, to reduce odor from food packaging using such a resin composition, aliphatic polyester-based resin (A)/polyhydroxyalkanoate (B) is preferably 50/50 to 90/10, more preferably 51/49 to 85/15, and still more preferably 52/48 to 80/20.

The amount of inorganic filler (C) in the aliphatic polyester-based resin composition of the second invention relative to the total amount of aliphatic polyester-based resin (A), polyhydroxyalkanoate (B), and inorganic filler (C) is 5 to 50% by mass, preferably 10 to 45% by mass, and still more preferably 15 to 40% by mass. If the amount of inorganic filler (C) is less than the above lower limit, the above-described effects of mixing the inorganic filler (C) are not fully exhibited. In addition, biodegradability at room temperature, marine biodegradability, and a moldability improving effect are not exhibited. If the amount of inorganic filler (C) is more than the above upper limit, mechanical strength, such as impact resistance, is decreased.

<Another Resin>

Another resin that can be contained in the aliphatic polyester-based resin composition of the second invention is the same as another resin that can be contained in the aliphatic polyester-based resin composition of the first invention. The description of the type and amount of such a resin of the first invention applies to the resin of the second invention.

<Another Constituent>

Another constituent that can be contained in the aliphatic polyester-based resin composition of the second invention is the same as another constituent that can be contained in the aliphatic polyester-based resin composition of the first invention. The description of the type and amount of such a constituent of the first invention applies to the constituent of the second invention.

<Method for Producing Aliphatic Polyester-based Resin Composition>

The method for producing the aliphatic polyester-based resin composition of the second invention is the same as the method for producing the aliphatic polyester-based resin composition of the first invention. The description of the method for producing the aliphatic polyester-based resin composition of the first invention applies to the method for producing the aliphatic polyester-based resin composition of the second invention.

[Tubular Article]

A tubular article of the second invention is obtained by molding the aliphatic polyester-based resin composition of the second invention. Examples of the molding method include injection molding, extrusion or co-extrusion molding (film extrusion using inflation or T-die method, extrusion lamination, pipe extrusion, wire/cable extrusion, profile extrusion), thermal pressing molding, hollow molding (various blow molding methods), thermoforming (vacuum forming, compression air forming), plastic processing, powder molding (rotation molding), and various nonwoven fabric forming methods (e.g., dry method, adhesion method, entanglement method, and spunbond method). Among such methods, extrusion molding is suitably used.

The tubular article of the second invention obtained by molding the aliphatic polyester-based resin composition of the second invention may be subjected to various types of secondary processing for the purpose of imparting chemical function, electrical function, magnetic function, mechanical function, frictional/abrasive/lubricating function, optical function, thermal function, and surface function such as biocompatibility. Examples of the secondary processing include bellows processing, embossing, painting, bonding, printing, metalizing (plating etc.), mechanical processing, and surface treatment (such as antistatic treatment, corona discharge treatment, plasma treatment, photochromism treatment, physical vapor deposition, chemical vapor deposition, and coating).

[Applications]

The tubular article of the second invention is suitably used for straws, tubes, hoses, rods of cotton swabs, sticks for balloons (holder sticks), cylinders formed of a film or a sheet, particularly for disposable products for such applications. Examples

Specific modes of the present invention will be described in more detail by way of Examples. However, the present invention is not limited to the following Examples so long as the invention does not depart from the scope thereof. Various production conditions and the values of evaluation results in the following Examples have meanings as preferred upper or lower limits in the embodiments of the present invention, and preferred ranges may be ranges defined by any combination of the above-described upper or lower limit values and values in the following Examples or any combination of the values in the following Examples.

[Measurement of Melt Flow Rate (MFR) of Resin Used]

Measurement was performed using a melt indexer at 190°C and a load of 2.16 kg according to JIS K7210 (1999). The unit of the melt flow rate is g/10 min.

[Raw Materials Used]

Resins and inorganic fillers used in Examples and Comparative Examples are as follows;

Hereinafter, "PBS" refers to "polybutylene succinate". "PBSA" refers to "polybutylene succinate adipate". "PLA" refers to "polylactic acid". "PHBH" refers to "poly(3-hydroxybutyrate-co-3-hydroxyhexanoate)". "PBAT" refers to "polybutylene adipate terephthalate".

<Aliphatic Polyester-based Resin (A)>

PBS-1 (BioPBS FZ71PM, manufactured by PTTMCC Biochem Co., Ltd., MFR: 20.0 g/10 min, melting point: 113°C)
PBS-2 (BioPBS FZ91PM, manufactured by PTTMCC Biochem Co., Ltd., MFR: 5.0 g/10 min, melting point: 113°C)
PBSA-1 (BioPBS FD72PM, manufactured by PTTMCC Biochem Co., Ltd., the amount of succinic acid unit in the total amount of dicarboxylic acid units: 74% by mol, MFR: 20.0 g/10 min, melting point: 89°C)
PBSA-2 (BioPBS FD92PM, manufactured by PTTMCC Biochem Co., Ltd., the amount of succinic acid unit in the total amount of dicarboxylic acid units: 74% by mol, MFR: 5.0 g/10 min, melting point: 89°C)

<Polyhydroxyalkanoate (B)>

PHBH-1 (Aonilex X331N, manufactured by KANEKA CORPORATION, molar ratio of 3HB/3HH: 94/6, MFR: 30 g/10 min, melting point: 140°C)
PHBH-2 (PHBH (trade name) X131A, manufactured by KANEKA CORPORATION, molar ratio of 3HB/3HH: 94/6, MFR: 6 g/10 min, melting point: 140°C)
PHBH-3 (Aonilex (trade name) X151A, manufactured by KANEKA CORPORATION, molar ratio of 3HB/3HH: 89/11, MFR: 6 g/10 min, melting point: 131°C)

<Polylactic acid>

PLA-1 (4032D, manufactured by NatureWorks LLC, MFR: 3.5 g/10 min, melting point: 170°C)
PLA-2 (3251D, manufactured by NatureWorks LLC, MFR: 29 g/10 min, melting point: 170°C)

<Aliphatic/Aromatic Polyester>

PBAT (Ecoflex C1200, manufactured by BASF. Com, MFR: 4 g/10 min, melting point: 110°C)

<Inorganic Filler (C)>

Talc-1 (MG-115, manufactured by FUJI TALC INDUSTRIAL CO., LTD., average particle diameter: 14 μm)
Talc-2 (MICRO ACE K-1, manufactured by NIPPON TALC Co., Ltd., average particle diameter: 8 μm)
Zeolite (MIZUKA LIZER-ES, manufactured by MIZUSAWA INDUSTRIAL CHEMICALS, LTD., average particle diameter: 2 μm)
$CaCO_3$ (SOFTON 1200, manufactured by BIHOKU FUNKA KOGYO CO. , LTD., average particle diameter: 2 μm)

[Examples and Comparative Examples of First Invention]

[Evaluation Method]

Methods for evaluating various physical properties and characteristics of Examples and Comparative Examples of the first invention are as follows.

<Water vapor permeability>

The measurement was performed using a cup method according to JIS Z0208 (1976). The evaluation was performed under the measurement conditions of 23°C and 83%RH, and the measured value was evaluated according to the following criteria.

O: The water vapor permeability was less than 5 $cc/m^2$·day (the water vapor barrier property is high).
×: The water vapor permeability was 5 $cc/m^2$·day or more.

<Oxygen permeability>

The measurement was performed according to JIS K7126 (2006) under the conditions of a temperature of 23°C and a humidity of 65%RH using a measurement device (device name: OXTRAN) manufactured by MOCON, U.S., and the measured value was evaluated according to the following criteria.

O: The oxygen permeability was less than 100 $g/m^2$·day (the oxygen barrier property is high).
×: The oxygen permeability was 100 $g/m^2$·day or more.

<H.D.T. (Heat Deflection Temperature)>

Heat deflection temperature was measured in conformity with JIS K7191 (2007). The higher the H.D.T., which is 90°C or higher, the higher the heat resistance, which is preferable.

<Charpy Impact Strength>

Charpy impact strength was measured by using a test piece having a notch in conformity with JIS K7111 (2006) . The higher the Charpy impact strength, which is 3 J/m or higher, the higher the impact resistance, which is preferable.

<Biodegradability Test>

After a sheet was stored for three months in microbially active soil, the sheet was subjected to mass measurement or appearance observation. The biodegradability was evaluated in accordance with the following criteria. The evaluation temperature was set to 28 ± 2°C.

○: Complete biodegradation was achieved.
△: Partially biodegradation was achieved, but complete biodegradation was not achieved.

×: Almost no biodegradation was achieved.

[Example 1-1, Comparative Examples I-1 to 3]

Materials in Table 1 were blended at the ratio in Table 1. The mixture was extruded in a strand shape from a twin-screw extruder with a screw diameter of $\varnothing$ 30 mm at a kneading temperature of 140°C, and thereafter, made into pellets by using a pelletizer. The obtained resin pellet was processed at 150°C by using a single-screw extruder with a screw diameter of $\varnothing$ 50 mm and a hanger coat-type T-die with a width of 300 mm, and the taking-up speed was adjusted such that a sheet with a thickness of 100 $\mu$m was obtained. Cooling temperature was set to 50°C. The chill roll was a semi-matt type roll, and an air knife was used. Regarding the obtained sheets, water vapor transmission rate and oxygen transmission rate were measured, and the biodegradation test was performed. The results are summarized in Table 1.

[Table 1]

| | | | Example I-1 | Comparative Example I-1 | Comparative Example I-2 | Comparative Example I-3 |
|---|---|---|---|---|---|---|
| Resin composition ratio (% by mass) | Aliphatic polyester-based resin (A) | PBSA-2 | 24 | 30 | | |
| | | PBS-2 | | | 30 | 50 |
| | Polyhydroxyalkanoate (B) | PHBH-2 | 56 | 70 | 70 | |
| | Polylactic acid | PLA-1 | | | | 50 |
| | Inorganic filler (C) | Talc-1 | 20 | | | |
| Evaluation results | Water vapor permeability | | ○ | × | × | × |
| | Oxygen permeability | | ○ | ○ | ○ | × |
| | Biodegradability (degradation ratio) | | ○ | ○ | △ | × |

Table 1 shows the followings.
In Comparative Example I-1 in which the inorganic filler (C) is not contained, the water vapor barrier property is lower than that in Example I-1. In the same manner, in Comparative Example 1-2, the water vapor barrier property and the biodegradability are low. In Comparative Example 1-3 in which the polyhydroxyalkanoate (B) and polylactic acid are used, the water vapor barrier property, the oxygen barrier property, and the biodegradability are each significantly low.
In Example I-1 in which the aliphatic polyester-based resin (A), the polyhydroxyalkanoate (B), and the inorganic filler (C) are contained, the water vapor barrier property, the oxygen barrier property, and the biodegradability are excellent.

<Examples 1-2 to 3, Comparative Examples 1-4 to 5>

Materials in Table 2 were blended at the ratio in Table 2. The mixture was extruded in a strand shape by using a twin-screw extruder with a screw diameter of $\varnothing$ 30 mm at a kneading temperature of 140°C, and thereafter, made into pellets by using a pelletizer. The obtained resin pellet was subjected to injection molding at a mold temperature of 40°C and a cylinder temperature of 150°C to obtain an ISO test piece for a mechanical characteristics test. Regarding the obtained test piece, Charpy impact strength, H.D.T. were measured, and the biodegradability test was performed. The results are summarized in Table 2.
The cooling time in injection molding is shown in Table 2. The cooling time is the indicator of formability. The shorter the cooling time, the more excellent the moldability.

[Table 2]

| | | | Example I-2 | Example I-3 | Comparative Example I-4 | Comparative Example I-5 |
|---|---|---|---|---|---|---|
| Resin composition ratio (% by mass) | Aliphatic polyester-based resin (A) | PBSA-1 | 20 | 20 | | |
| | | PBS-1 | | | 30 | 60 |
| | Polyhydroxyalkanoate (B) | PHBH-1 | 50 | 50 | 60 | |
| | Polylactic acid | PLA-2 | | | | 20 |
| | Inorganic filler (C) | Talc-1 | 30 | 30 | | 20 |
| | | CaCO$_3$ | | | 10 | |
| | | Zeolite | | 3 | | 20 |
| Evaluation results | H.D.T. | °C | 95 | 95 | 96 | 89 |
| | Charpy impact strength | J/m | 3 | 3 | 2 | 3 |
| | Biodegradability | | ○ | ○ | △ | × |
| | Cooling time | sec | 15 | 15 | 20 | 30 |

As shown in Table 2, in Examples 1-2 and 3 in which the aliphatic polyester-based resin (A), the polyhydroxyalkanoate (B), and the inorganic filler (C) are contained within the range defined in the first invention, heat resistance and biodegradability are excellent, cooling time is short, and moldability is excellent.

In Comparative Example 1-4, in which the aliphatic polyester-based resin (A), the polyhydroxyalkanoate (B), and the inorganic filler (C) are contained and in which the inorganic filler (C) content is low, biodegradability is low, cooling time is long, and moldability is lower than those in Examples I-2 and 3.

In Comparative Example I-5, in which polylactic acid is used in place of the aliphatic polyester-based resin (A), heat resistance, biodegradability, and moldability are low.

[Examples and Comparative Examples of Second Invention]

[Evaluation Method]

Methods for evaluating various physical properties and characteristics of Examples and Comparative Examples of the second invention are as follows.

<Evaluation of Moldability>

Moldability exhibited when straws were obtained by using a tube-shaped circular die was evaluated in accordance with the following criteria.

○: Good samples are obtained without surging or faulty cutting.
×: Surging or faulty cutting occurs.

<Piercing Test>

The ends of 10 straws were cut at a 45° angle with general purpose scissors. A polyethylene film with a thickness of 40 μm bonded to a cup was pierced with the end of the straw by hand from 3.5 cm above the film, and the state is evaluated in accordance with the following criteria.

○: All 10 straws pierce the polyethylene film without breaking.
△: Among 10 straws, 5 to 9 straws pierce the polyethylene film.
×: Among 10 straws, none pierce the polyethylene film.

<Odor Test>

Whether people sense odor when they drink mineral water by using a formed straw was evaluated by using 10 people. Evaluation criteria are as follows.

◎: Two or less people sense odor.
○: Three or four people sense odor.
×: Five or more people sense odor.

<Elmendorf Tear Test>

Tear strength was measured in conformity with JIS K7128-2 (2007). The higher the tear strength, the more excellent the tear resistance, which is preferable.

<Biodegradability Test in Soil>

After a sheet was stored at 28 ± 2°C for three months in soil collected from a farm in Mie prefecture (water content 30%), the sheet was weighed, and the biodegradability was evaluated in accordance with the following criteria. Degradability was calculated from the following equation.

$$\text{Degradability (\%)} = 100 - (\text{sample weight after 3 months/sample weight before test}) \times 100$$

○: Degradability is 90% or higher.
△: Degradability is 30% or higher and lower than 90%.
×: Degradability is lower than 30%.

<Biodegradability Test in Sea Water>

After a sheet was stored at 28 ± 2°C for six months in sea water collected from Yokkaichi port in Yokkaichi city Mie prefecture, the sheet was weighed, and the biodegradability was evaluated in accordance with the following criteria. Degradability was calculated from the following equation. Degradability (%) = 100 - (sample weight after 6 months/sample weight before test) × 100

○: Degradability is 50% or higher.
△: Degradability is 10% or higher and lower than 50%.
×: Degradability is lower than 10%.

<Marine Biodegradability Test (ASTM D6691)>

The amount of $CO_2$ generated after 100 days from starting the test was measured in conformity with the test method of ASTM D6691, and biodegradability was calculated in conformity with the calculation method of ASTM D6691. In the test, sea water near Belgium was used. The measuring temperature was 30 ± 2°C. The sample for evaluation was made into 60 mg powder having an average particle diameter of 250 $\mu$m or less, and measurement was performed.

[Examples II-1 to 6, Comparative Examples II-1 and 2]

Materials in Table 3 were blended at the ratio in Table 3. The mixture was extruded in a strand shape from a twin-screw extruder with a screw diameter of $\varnothing$ 30 mm at a kneading temperature of 140°C, and thereafter, made into pellets by using a pelletizer. The obtained resin pellet was subjected to extrusion molding, and straws having a tubular shape with a diameter of 7 mm and a wall thickness of 0.2 mm were extruded by using a tube-type circular die. Thereafter, the piercing test and the odor test were performed. Only test pieces in Examples II-1, 3, 4, and 6 and Comparative Examples II-1 and 2 were subjected to the odor test.
A sheet with a thickness of 100 $\mu$m was produced by pressing the obtained pellets. Then, biodegradation test in soil and biodegradation test in sea water were performed.
The obtained pellets were processed into powder having an average particle diameter of 250 $\mu$m or less. The marine biodegradability of 60 mg of the powder was evaluated by the marine biodegradation test of ASTM D6691.
The results are summarized in Table 3.

[Comparative Example II-3]

In Comparative Example II-3, molding and evaluation were performed in the same manner as in Example II-1, except that the materials in Table 3 were blended at the ratio in Table 3 and that kneading was performed at 180°C.

[Table 3]

| | | | Example II-1 | Example II-2 | Example II-3 | Example II-4 | Example II-5 | Example II-6 | Comparative Example II-1 | Comparative Example II-2 | Comparative Example II-3 |
|---|---|---|---|---|---|---|---|---|---|---|---|
| Resin composition ratio (% by mass) | Aliphatic polyester-based resin (A) | PBSA-2 | 24 | 32 | 16 | 24 | | 56 | | 70 | |
| | | PBS-2 | | | | | 16 | | | | |
| | Polyhydroxyalkanoate (B) | PHBH-2 | 56 | 48 | 64 | 56 | 64 | 24 | 100 | 30 | |
| | | PHBH-3 | | | | | | | | | |
| | Polylactic acid | PLA-1 | | | | | | | | | 65 |
| | Aliphatic/aromatic polyester | PBAT | | | | | | | | | 20 |
| | Inorganic filler (C) | Talc-1 | 20 | 20 | 10 | | | | | | 15 |
| | | Talc-2 | | | | | | 20 | | | |
| | | CaCO$_3$ | | | | 20 | 10 | | | | |
| Evaluation results | Moldability | | ○ | ○ | ○ | ○ | ○ | ○ | × | ○ | ○ |
| | Piercing property | | ○ | ○ | ○ | ○ | ○ | ○ | ○ | × | ○ |
| | Odor test | | ○ | - | ○ | ○ | - | ◎ | × | ○ | ○ |
| | Biodegradability in soil at room temperature | | ○ | ○ | ○ | ○ | △ | ○ | ○ | ○ | × |
| | Biodegradability in sea water | | ○ | ○ | ○ | ○ | △ | ○ | ○ | ○ | × |
| | Marine biodegradability (%) | | 67 | 64 | 70 | 68 | 70 | 52 | 100 | 51 | - |

[Examples II-7, 8, Comparative Examples II-4]

Materials in Table 4 were blended at the ratio in Table 4. The mixture was extruded in a strand shape by using a twin-screw extruder with a screw diameter of $\varnothing$ 30 mm at a kneading temperature of 140°C, and thereafter, made into pellets by using a pelletizer. The obtained resin pellet was molded at a molding temperature of 160°C and a blow ratio of 2.5 by using a blown film molding machine with a screw diameter of $\varnothing$ 40 mm to obtain a tubular film with a wall thickness of 30 $\mu$m. The film was subjected to the tear test. The obtained sheet was subjected to the biodegradation test in soil and the biodegradation test in sea water.

The results are summarized in Table 4.

"Talc" in Table 4 refers to "Talc (manufactured by NIPPON TALC Co., Ltd. MICRO ACE K-1, average particle diameter: 8 $\mu$m)".

[Table 4]

| | | | Example II-7 | Example II-8 | Comparative Example II-4 |
|---|---|---|---|---|---|
| Resin composition ratio (% by mass) | Aliphatic polyester-based resin (A) | PBSA-1 | 72 | 72 | 80 |
| | | PBS-1 | | | |
| | Polyhydroxyalkanoate (B) | PHBH-1 | 18 | 18 | 20 |
| | | PHBH-2 | | | |
| | Polylactic acid | PLA | | | |
| | Aliphatic/aromatic polyester | PBAT | | | |
| | Inorganic filler (C) | Talc | 10 | | |
| | | CaCO$_3$ | | 10 | |
| Evaluation results | Tear strength (N/mm) | MD | 2 | 2 | 2 |
| | | TD | 23 | 40 | 10 |
| | Biodegradability in soil at room temperature | | ○ | ○ | ○ |
| | Biodegradability in sea water | | ○ | ○ | ○ |

Table 3 shows that the tubular article of the second invention has higher biodegradability at room temperature, higher biodegradability in sea water, more excellent moldability when a molded article is obtained, and more excellent characteristics, such as mechanical properties, for example, piercing strength, than a molded article containing a related biodegradable resin.

Table 4 shows that the tubular article of the second invention has high biodegradability at room temperature, excellent biodegradability in sea water, and high tear strength. Thus, when the tubular article is used as a tube formed of a film, tear is unlikely to occur.

Although the present invention has been described in detail by way of the specific modes, it is apparent for those skilled in the art that various changes can be made without departing from the spirit and scope of the present invention.

The present application is based on Japanese Patent Application No. 2018-067297 filed on March 30, 2018, Japanese Patent Application No. 2018-161612 filed on August 30, 2018, and Japanese Patent Application No. 2019-018067 filed on February 4, 2019, the entire contents of which are incorporated herein by reference.

Reference Signs List

The present invention may be summarized by reference to the following embodiments (embs.):

[Emb. 1]

A molded article comprising an aliphatic polyester-based resin composition,

wherein the aliphatic polyester-based resin composition contains an aliphatic polyester-based resin (A) containing a repeat unit derived from an aliphatic diol and a repeat unit derived from an aliphatic dicarboxylic acid as main structural units, a polyhydroxyalkanoate (B), and an inorganic filler (C),

the polyhydroxyalkanoate (B) is a copolymer containing a 3-hydroxybutyrate unit and a 3-hydroxyhexanoate unit as main structural units,

a mass ratio of the aliphatic polyester-based resin (A) to the polyhydroxyalkanoate (B) is 40/60 to 10/90, and an amount of the inorganic filler (C) relative to a total amount of the aliphatic polyester-based resin (A), the polyhydroxyalkanoate (B), and the inorganic filler (C) is 15 to 50% by mass.

[Emb. 2]

The molded article according to Emb. 1, wherein the inorganic filler (C) is one or two or more selected from a group consisting of anhydrous silica, calcium carbonate, talc, and zeolite.

[Emb. 3]

The molded article according to Emb. 1 or 2, wherein a ratio of a repeat unit derived from succinic acid to repeat units derived from all dicarboxylic acids contained in the aliphatic polyester-based resin (A) is 5% by mol or higher and 100% by mol or lower.

[Emb. 4]

The molded article according to any one of Embs. 1 to 3 comprising the injection-molded article or an extrusion-molded article.

[Emb. 5]

A sheet comprising the molded article according to any one of Embs. 1 to 4.

[Emb. 6]

A container comprising the molded article according to any one of Embs. 1 to 4.

[Emb. 7]

The container according to Emb. 6, wherein the container is a food packaging container.

[Emb. 8]

A tubular article comprising an aliphatic polyester-based resin composition,

wherein the aliphatic polyester-based resin composition contains an aliphatic polyester-based resin (A) containing a repeat unit derived from an aliphatic diol and a repeat unit derived from an aliphatic dicarboxylic acid as main structural units, a polyhydroxyalkanoate (B), and an inorganic filler (C),

the polyhydroxyalkanoate (B) is a copolymer containing a 3-hydroxybutyrate unit and a 3-hydroxyhexanoate unit as main structural units, and

an amount of the inorganic filler (C) relative to a total amount of the aliphatic polyester-based resin (A), the polyhydroxyalkanoate (B), and the inorganic filler (C) is 5 to 50% by mass.

[Emb. 9]

The tubular article according to Emb. 8, wherein the inorganic Filler (C) is one or two or more selected from a group consisting of anhydrous silica, calcium carbonate, talc, and zeolite.

[Emb. 10]

The tubular article according to Emb. 8 or 9, wherein a ratio of a repeat unit derived from succinic acid to repeat units derived from all dicarboxylic acids contained in the aliphatic polyester-based resin (A) is 5% by mol or higher and 100% by mol or lower.

[Emb. 11]

The tubular article according to any one of Embs. 8 to 10 comprising an injection-molded article.

[Emb. 12]

A straw comprising the tubular article according to any one of Embs. 8 to 11.

[Emb. 13]

A cotton swab comprising the tubular article according to any one of Embs. 8 to 11.

[Emb. 14]

A stick for balloons comprising the tubular article according to any one of Embs. 8 to 11.

[Emb. 15]

A tubular article having an absolute or relative biodegradability of 60% or higher after 100 days in a marine biodegradation test (ASTM D6691) at a sea water temperature of 30°C $\pm$ 2°C.

[Emb. 16]

A straw comprising the tubular article according to Emb. 15.

## Claims

1. A tubular article comprising an aliphatic polyester-based resin composition,

wherein the aliphatic polyester-based resin composition contains an aliphatic polyester-based resin (A) containing a repeat unit derived from an aliphatic diol and a repeat unit derived from an aliphatic dicarboxylic acid as main structural units, a polyhydroxyalkanoate (B), and an inorganic filler (C),
the polyhydroxyalkanoate (B) is a copolymer containing a 3-hydroxybutyrate unit and a 3-hydroxyhexanoate unit as main structural units, and
an amount of the inorganic filler (C) relative to a total amount of the aliphatic polyester-based resin (A), the polyhydroxyalkanoate (B), and the inorganic filler (C) is 5 to 50% by mass.

2. The tubular article according to Claim 1, wherein the inorganic Filler (C) is one or two or more selected from a group consisting of anhydrous silica, calcium carbonate, talc, and zeolite.

3. The tubular article according to Claim 1 or 2, wherein a ratio of a repeat unit derived from succinic acid to repeat units derived from all dicarboxylic acids contained in the aliphatic polyester-based resin (A) is 5% by mol or higher and 100% by mol or lower.

4. The tubular article according to any one of Claims 1 to 3 comprising an injection-molded article.

5. A straw or cotton swab comprising the tubular article according to any one of Claims 1 to 4.

6. A stick for balloons comprising the tubular article according to any one of Claims 1 to 4.

7. A tubular article having an absolute or relative biodegradability of 60% or higher after 100 days in a marine biodegradation test (ASTM D6691) at a sea water temperature of 30°C $\pm$ 2°C.

8. A straw comprising the tubular article according to Claim 7.

Europäisches
Patentamt

European
Patent Office

Office européen
des brevets

# EUROPEAN SEARCH REPORT

Application Number

EP 21 20 2629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | JP 2001 341771 A (MITSUBISHI GAS CHEMICAL CO) 11 December 2001 (2001-12-11) | 1-6 | INV. C08L67/02 |
| A | * claims 1-4 * <br> * examples 1-4 * <br> ----- | 7,8 | C08J5/18 <br> C08K3/013 <br> C08K3/26 |
| Y | WO 01/49770 A1 (PROCTER & GAMBLE [US]; NODA ISAO [US]; SATKOWSKI MICHAEL MATTHEW [US]) 12 July 2001 (2001-07-12) | 1-6 | C08K3/34 <br> C08K3/36 <br> C08L67/04 |
| A | * Examples * <br> * Claims * <br> ----- | 7,8 | C08L101/16 <br> C08G63/06 <br> C08G63/16 |
| A,D | JP 2011 208040 A (FUJI CHEMICAL KK; NIPPON STRAW CO LTD) 20 October 2011 (2011-10-20) <br> * claims 1-4 * <br> * Examples * <br> ----- | 1-8 | |

**TECHNICAL FIELDS SEARCHED (IPC)**

C08G

The present search report has been drawn up for all claims

| Place of search | Date of completion of the search | Examiner |
|---|---|---|
| The Hague | 13 January 2022 | Pouilley, Delphine |

EPO FORM 1503 03.82 (P04C01)

## ANNEX TO THE EUROPEAN SEARCH REPORT
## ON EUROPEAN PATENT APPLICATION NO.

EP 21 20 2629

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2022

| Patent document cited in search report | | Publication date | Patent family member(s) | | Publication date |
|---|---|---|---|---|---|
| JP 2001341771 | A | 11-12-2001 | NONE | | |
| WO 0149770 | A1 | 12-07-2001 | AT | 444324 T | 15-10-2009 |
| | | | AU | 2284601 A | 16-07-2001 |
| | | | BR | 0016877 A | 08-10-2002 |
| | | | CA | 2393471 A1 | 12-07-2001 |
| | | | CN | 1413226 A | 23-04-2003 |
| | | | EP | 1242497 A1 | 25-09-2002 |
| | | | ES | 2333403 T3 | 22-02-2010 |
| | | | HK | 1050755 A1 | 04-07-2003 |
| | | | JP | 2003518998 A | 17-06-2003 |
| | | | KR | 20020063280 A | 01-08-2002 |
| | | | WO | 0149770 A1 | 12-07-2001 |
| JP 2011208040 | A | 20-10-2011 | CN | 102206402 A | 05-10-2011 |
| | | | JP | 5393566 B2 | 22-01-2014 |
| | | | JP | 2011208040 A | 20-10-2011 |
| | | | KR | 20110109864 A | 06-10-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014068943 A
- JP 2001341771 A
- JP 2001039426 A
- JP 2005350530 A
- JP 2011208040 A
- JP 2018067297 A
- JP 2018161612 A
- JP 2019018067 A

**Non-patent literature cited in the description**

- *J. Bacteriol.,* 1997, vol. 179, 4821